(19) Europäisches Patentamt
European Patent Office
Office européen des brevets

(11) EP 1 156 152 A1

(12) **EUROPEAN PATENT APPLICATION**

(43) Date of publication:
**21.11.2001 Bulletin 2001/47**

(51) Int Cl.$^7$: **D06M 23/08**, D06M 14/08

(21) Application number: **01111854.4**

(22) Date of filing: **16.05.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **16.05.2000 JP 2000143955**
**12.09.2000 JP 2000276910**

(71) Applicants:
- **Toyo Boseki Kabushiki Kaisha**
**Osaka-shi, Osaka 530-8230 (JP)**
- **Japan Exlan Co., Ltd.**
**Osaka-shi Osaka 530-0004 (JP)**
- **KOMATSU SEIREN CO., LTD.**
**Nomi-gun Ishikawa 929-0124 (JP)**

(72) Inventors:
- **Shimizu, Kenji**
**Osaka-shi, Osaka 530-8230 (JP)**
- **Nishida, Ryosuke, Japan Exlan Company Ltd.**
**Okayama-shi, Okayama 704-8510 (JP)**
- **Murakami, Shuichi, c/o Komatsu Seiren Co., Ltd.**
**Nomi-gun, Ishikawa 929-0124 (JP)**
- **Takigaura, Ryosei c/o Komatsu Seiren Co., Ltd.**
**Nomi-gun, Ishikawa 929-0124 (JP)**
- **Nishida, Migihiro**
**Osaka-shi, Osaka 530-8230 (JP)**
- **Sogo, Kanji**
**Osaka-shi, Osaka 530-8230 (JP)**
- **Sato, Hiroyuki**
**Osaka-shi, Osaka 530-8230 (JP)**

(74) Representative: **Müller-Boré & Partner**
**Patentanwälte**
**Grafinger Strasse 2**
**81671 München (DE)**

# (54) Moisture absorbing and discharging cloth and production method thereof

(57) The present invention provides a moisture absorptive and dischargeable cloth comprising a hydrophobic synthetic fiber in a proportion of not less than 60 wt%, and moisture highly absorptive and dischargeable organic fine particles comprising an acrylic polymer having a crosslinking structure and a carboxyl group in a salt form, wherein the organic fine particles are bonded to the surface of the fiber by graft polymerization. The moisture absorptive and dischargeable cloth of the present invention shows extremely high moisture absorption as compared to an unprocessed cloth, and shows superior moisture absorption-heat generation-temperature rise property and moisture absorption-heat generation/moisture discharge-cooling property. When the cloth of the present invention is used for clothings, it quickly absorbs moisture and heat in the clothings and discharges them into the air, thus controlling the weather within clothings, as a result of which sweatiness and stickiness are reduced and a smooth touch is afforded. In addition, since it is superior in resistance to washing and resistance to friction, the moisture absorption and discharge property can be maintained for a long time.

FIG. 1

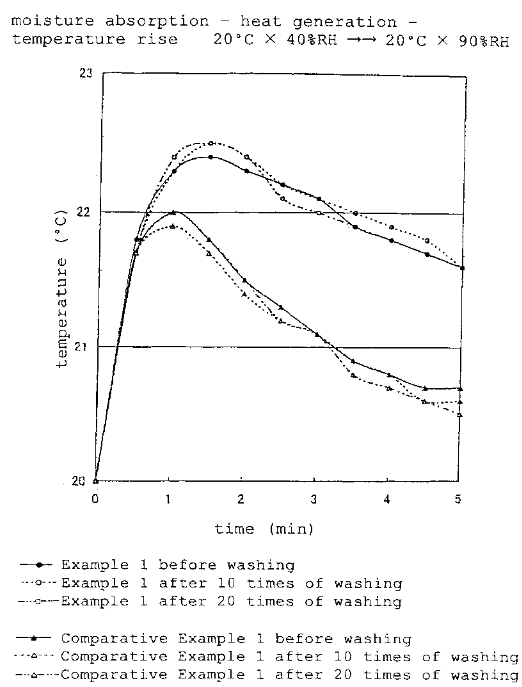


EP 1 156 152 A1

## Description

The present invention relates to a cloth made of a hydrophobic synthetic fiber superior in moisture absorption and moisture discharge properties.

As a cloth for clothings, there has been conventionally used a woven/knitted fabric 100% constituted of cotton, which is hydrophilic. While such a cloth 100% made of a hydrophilic fiber is superior in moisture absorption, it is slow in moisture discharge and retains moisture, thereby giving a sense of sweatiness. There has also been used a woven/knitted fabric 100% constituted of a polyester fiber, which is hydrophobic, as a cloth for clothings. This cloth 100% made of a hydrophobic fiber is non-absorbent, poor in moisture absorption and discharge, and cannot eliminate a sense of sweatiness.

In an attempt to overcome the above-mentioned defects of the prior art, the present inventors have provided a cloth made of a hydrophobic synthetic fiber superior in moisture absorption and moisture discharge according to the present invention. The present invention specifically aims at improving the moisture absorption and discharge properties of the above-mentioned cloth, particularly resistance to washing, thereby to dramatically improve comfortableness as evaluated in terms of sweatiness, stickiness, smooth touch and the like, without impairing aesthetic aspects or functions, such as softness, color and gloss, of a hydrophobic synthetic fiber.

According to the present invention, the above-mentioned problems can be overcome by a moisture absorptive and dischargeable cloth comprising a hydrophobic synthetic fiber in a proportion of not less than 60 wt% and moisture highly absorptive and dischargeable organic fine particles comprising an acrylic polymer having a crosslinking structure and a carboxyl group in a salt form, wherein the organic fine particles are bonded to the surface of the fiber by graft polymerization.

Preferably, the above-mentioned moisture absorptive and dischargeable cloth comprises the above-mentioned moisture highly absorptive and dischargeable organic fine particles that are bonded to the surface of the fiber by graft polymerization of a monomer comprising a polyoxyalkylene group and two or more double bonds capable of radical polymerization.

More preferably, the above-mentioned moisture highly absorptive and dischargeable organic fine particles are bonded to the surface of the fiber by graft polymerization of a monomer of the following formula (1), which comprises a polyoxyalkylene group and two or more double bonds capable of radical polymerization, with at least one monomer selected from a monomer comprising a double bond capable of radical polymerization and at least one of hydroxyl group, carboxyl group, amino group, sulfonic acid group and phosphoric acid group, and a monomer comprising an aziridine group:

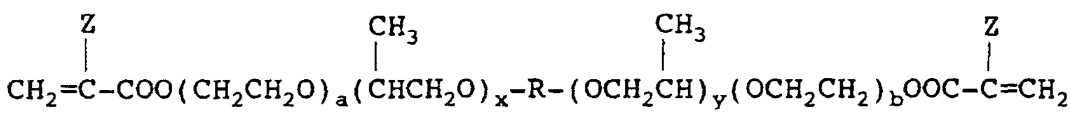 (1)

wherein R is a group of the formula

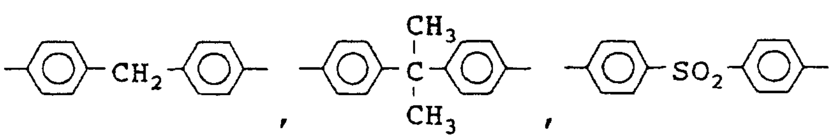 , , or $-C_nH_{2n}-$

directly bonded, in which n is an integer of 1 to 6, Z is H or $CH_3$, a and b are each 0 or a positive integer and make a+b 0 to 50, and x and y are each 0 or a positive integer and make x+y 0 to 30, provided that a+b+x+y is not less than 10.

More preferably, the above-mentioned moisture highly absorptive and dischargeable organic fine particles are bonded to the surface of fiber by graft polymerization of the monomer of the above-mentioned formula (1), a monomer comprising a double bond capable of radical polymerization and at least one of hydroxyl group, carboxyl group, amino group, sulfonic acid group and phosphoric acid group, and a monomer comprising an aziridine group.

Preferably, the above-mentioned moisture absorptive and dischargeable cloth comprises the above-mentioned moisture highly absorptive and dischargeable organic fine particles obtained by introducing a crosslinking structure into an acrylonitrile polymer or a (meth)acrylate polymer containing acrylonitrile or (meth)acrylate in a proportion of not less than 50 wt% by a hydrazine, divinylbenzene or triallyl isocyanurate treatment and chemically converting the

residual nitrile group or ester group into a carboxyl group in a salt form by hydrolysis, the fine particles containing the carboxyl group in the salt form in a proportion of not less than 1.0 mmol/g.

Preferably, the above-mentioned moisture absorptive and dischargeable cloth shows moisture absorption at 30°C, 90% RH, which is higher by not less than 2% before washing and not less than 1.5% after 20 times of washing than that of an unprocessed cloth containing the hydrophobic synthetic fiber in a proportion of not less than 60 wt%.

Preferably, the above-mentioned moisture absorptive and dischargeable cloth shows moisture absorption and discharge (ΔW) of not less than 1.0. This value is a difference between moisture absorption under a 20°C, 65% RH environment and that under a 30°C, 90% RH environment.

Preferably, the above-mentioned moisture absorptive and dischargeable cloth shows water repellency according to JIS L1092 of not less than grade 5 before washing, and not less than grade 4 after 20 times of washing.

Preferably, the above-mentioned moisture absorptive and dischargeable cloth shows a frictional static voltage according to JIS L1094 under a 20°C, 40% RH environment of not more than 1000 V before washing, and not more than 2000 V after 50 times of washing.

Preferably, the above-mentioned moisture absorptive and dischargeable cloth shows a frictional static voltage according to JIS L1094 under a 20°C, 40% RH environment of not more than 500 V before washing, and not more than 2000 V after 20 times of washing.

Preferably, the above-mentioned moisture absorptive and dischargeable cloth shows air permeability according to JIS L1096 A of not more than 2.0 cc/cm$^2$/sec.

The moisture absorptive and dischargeable cloth of the present invention can be produced by applying a processing agent comprising moisture highly absorptive and dischargeable organic fine particles comprising an acrylic polymer having a carboxyl group in a salt form and a crosslinking structure, and a monomer comprising a polyoxyalkylene group and two or more double bonds capable of radical polymerization, to a cloth comprising a hydrophobic synthetic fiber in a proportion of not less than 60 wt% to allow polymerization on the cloth.

Preferably, the above-mentioned production method uses the above-mentioned processing agent comprising the above-mentioned moisture highly absorptive and dischargeable organic fine particles (5 - 30 parts by weight), a monomer of the above-mentioned formula (1) (1 - 25 parts by weight), a monomer comprising a double bond capable of radical polymerization and at least one of hydroxyl group, carboxyl group, amino group, sulfonic acid group and phosphoric acid group (0 - 5 parts by weight, more preferably 0.1 - 5 parts by weight), and a monomer comprising an aziridine group (0.1 - 5 parts by weight).

The present invention provides clothings made of the above-mentioned moisture absorptive and dischargeable cloth, outerwear made of the cloth preferably showing water repellency according to JIS L1092 of grade 5 or above before washing, and grade 4 or above after 20 times of washing, formalwear made of the cloth, inner wear made of the cloth, dust free garment made of the cloth preferably showing a frictional static voltage according to JIS L1094 under a 20°C, 40% RH environment of not more than 1000 V before washing, and not more than 2000 v after 50 times of washing, lining made of the cloth preferably showing a frictional static voltage according to JIS L1094 under a 20°C, 40% RH environment of not more than 500 V before washing, and not more than 2000 V after 20 times of washing, and a fabric for night clothing or bed clothing made of the cloth preferably showing air permeability according to JIS L1096 A of not more than 2.0 cc/cm$^2$/sec.

According to the present invention, moisture highly absorptive and dischargeable organic fine particles comprising an acrylic polymer having a carboxyl group in a salt form and a crosslinking structure are applied to a cloth made of a hydrophobic synthetic fiber. The resulting cloth is superior in moisture absorption and discharge properties, and since the above-mentioned moisture highly absorptive and dischargeable organic fine particles are fixed to the surface of the fiber by graft polymerization, it shows moisture absorption and discharge properties superior in resistance to washing and friction.

Figure 1 is a graph showing moisture absorption-heat generation-temperature rise in Example 1 and Comparative Example 1.

Figure 2 is a graph showing changes in temperature during moisture absorption-heat generation/moisture discharge-cooling in Example 1 and Comparative Example 1.

Figure 3 is a graph showing moisture absorption-heat generation-temperature rise in Example 2 and Comparative Example 2.

Figure 4 is a graph showing changes in temperature during moisture absorption-heat generation/moisture discharge-cooling in Example 2 and Comparative Example 2.

Figure 5 is a graph showing moisture absorption-heat generation-temperature rise in Example 3 and Comparative Example 3.

Figure 6 is a graph showing changes in temperature during moisture absorption-heat generation/moisture discharge-cooling in Example 3 and Comparative Example 3.

Figure 7 is a graph showing changes in the temperature within clothing during perspiration in Example 6 and Comparative Example 6.

Figure 8 is a graph showing changes in the humidity within clothing during perspiration in Example 6 and Comparative Example 6.

A cloth containing a hydrophobic synthetic fiber in a proportion of not less than 60 wt% to be used in the present invention contains a hydrophobic synthetic fiber in a proportion of not less than 60 wt% as a fiber constituting the cloth, and includes a cloth consisting of a hydrophobic synthetic fiber alone. The hydrophilic fiber to be used along with the hydrophobic synthetic fiber is exemplified by natural fibers such as cotton, wool and the like. By the cloth in the present invention is meant woven fabric, knitted fabric, non-woven fabric and the like.

Examples of the hydrophobic synthetic fiber include fibers made from polyester, polyamide, polyolefin, polyacrylonitrile, polyvinyl chloride, polyvinylidene chloride and the like. A particularly preferably used fiber is polyester, which is preferably a fiber made from a homopolymer, a blend polymer or a copolymer mainly comprising polyethylene terephthalate, polybutylene terephthalate, polytetramethylene terephthalate and the like. Where necessary, these fibers may contain a delustering agent such as silicon dioxide, barium sulfate, titanium dioxide, kaolinite and the like, and a conducting agent such as carbon black and low melting point metal and the like in a suitable amount. The cross section of the fiber is not subject to any particular limitation and may be a solid core, hollow, circle, trilobal, modified and the like. The form of the yarn may be any of a spun yarn made of a short fiber, a long fiber multifilament and a long-short composite fiber. In addition, the total fineness of a hydrophobic synthetic fiber, the fineness of a single yarn and the number of single yarn are not particularly limited. The total fineness is selected from the range of approximately 33 dtex to 560 dtex, according to the use. Furthermore, false-twisting processing, and various bulking processings and confounding treatments using a high pressure air flow at a normal temperature can be applied for achieving the desired feel and object.

The moisture highly absorptive and dischargeable organic fine particles comprising an acrylic polymer having a carboxyl group in a salt form and a crosslinking structure to be used in the present invention preferably has an average particle size of not more than 5 μm, and comprises an acrylic polymer having a carboxyl group in a salt form and a crosslinking structure. It shows high moisture absorption as evidenced by a moisture percentage at 20°C, relative humidity (RH) 65% of not less than 15 wt% and not more than 100 wt%, and high moisture discharge as evidenced by a moisture percentage of not less than 15 wt% and not more than 80 wt% after standing the fine particles at 20°C, 40% RH for 1 h, which particles having absorbed moisture to saturation at 20°C, 80% RH humidity. The above-mentioned organic fine particles show a moisture control function well balancing the moisture absorption and moisture discharge. Because the moisture highly absorptive and dischargeable organic fine particles have such properties, a cloth comprising the particles attached thereto shows strikingly improved comfortableness in terms of sweatiness, stickiness, smooth touch and the like.

The moisture highly absorptive and dischargeable organic fine particles are preferably absorbent enough to decrease the sense of sweatiness, as shown by a moisture percentage of not less than 30 wt% at 20°C, 65% RH, and high moisture absorption rate with the initial moisture absorption rate of not less than 0.8 wt%/min. More preferably, the moisture percentage of the organic fine particles at 20°C, 65% RH is not less than 40 wt%, and the initial moisture absorption rate thereof is not less than 1.0 wt%/min. The initial moisture absorption rate is obtained by measuring the moisture percentage upon standing the particles in a desiccator at 20°C, 65% RH for 10 min after drying in vacuo at 70°C, 12 h or after drying the particles at atmospheric pressure at 120°C, 12 h and calculating the increase in the moisture percentage per minute.

As used herein, the acrylic polymer contains acrylic acid or a derivative thereof, such as acrylic acid, methacrylic acid, acrylonitrile, methacrylonitrile and the like, as a main constituent unit. Examples of the carboxyl group in a salt form include those in a salt form due to alkaline metals such as Li, Na, K and the like; alkaline earth metals such as Be, Mg, Ca, Ba and the like; other metals such as Cu, Zn, Al, Mn, Ag, Fe, Co, Ni and the like; organic cations such as $NH_4$, amine and the like, which may be used in combination. The crosslinking agent to afford the crosslinking structure is preferably hydrazine, divinylbenzene or triallyl isocyanurate.

Examples of the moisture highly absorptive and dischargeable organic fine particles include those obtained by introducing a crosslinking structure into an acrylonitrile polymer or a (meth)acrylate polymer containing acrylonitrile or (meth)acrylate in a proportion of not less than 50 wt% (preferably not less than 85 wt%) by a hydrazine, divinylbenzene or triallyl isocyanurate treatment, followed by chemical conversion of the residual nitrile group or ester group into a carboxyl group in a salt form by hydrolysis, the carboxyl group in a salt form being contained in a proportion of not less than 1.0 mmol/g (preferably not less than 2.0 mmol/g). Specifically, there are mentioned (a) acrylic metal modified particles wherein a crosslinking structure is introduced into an acrylonitrile polymer containing acrylonitrile in a proportion of not less than 85 wt%, such that an increase in the nitrogen content is 1.0 - 15.0 wt%, by a hydrazine treatment, and the residual nitrile group is chemically converted to a carboxyl group in a salt form by hydrolysis, the carboxyl group in a salt form being contained in a proportion of not less than 1.0 mmol/g, and (b) acrylic metal modified particles wherein a crosslinking structure is introduced into an acrylonitrile polymer or a (meth)acrylate polymer containing acrylonitrile or (meth)acrylate in a proportion of not less than 50 wt% with divinylbenzene or triallyl isocyanurate and the residual nitrile group or ester group is chemically converted to a carboxyl group in a salt form by hydrolysis, the carboxyl

group in a salt form being contained in a proportion of not less than 1.0 mmol/g.

As used herein, the content of the carboxyl group in a salt form is obtained by determining the amounts of carboxyl group and carboxylic acid by titration and subtracting the amount of carboxylic acid from the amount of carboxyl group (USP 5,691,421). The nitrogen content here is determined using a CHN elemental analysis apparatus.

To provide the above-mentioned acrylonitrile polymer, a monomer can be used with acrylonitrile, wherein the monomer is exemplified by vinyl halide, vinylidene halide, acrylate, methacrylate, sulfonic acid-containing monomer (e.g., p-styrenesulfonic acid and the like) and a salt thereof, carboxylic acid-containing monomer (e.g., acrylic acid and the like) and a salt thereof, acrylamide, styrene, vinyl acetate, and the like.

With regard to the above-mentioned (a), hydrazine crosslinking is applied to acrylonitrile polymer by any method which is free of any particular limitation as long as the nitrogen content increases by 1.0 - 15.0 wt% due to the crosslinking. A treatment with the hydrazine in a concentration of 1 - 80 wt% at a temperature of 50 - 120°C for 0.2 - 10 h is industrially preferable. The hydrazine to be used here is exemplified by hydrazine hydrate, hydrazine sulfate, hydrazine hydrochloride, hydrazine nitrate, hydrazine bromate and the like.

To provide the above-mentioned (meth)acrylate polymer, a monomer can be used with (meth)acrylate, wherein the monomer is exemplified by vinyl halide, vinylidene halide, acrylonitrile, sulfonic acid-containing monomer (e.g., p-styrenesulfonic acid and the like) and a salt thereof, carboxylic acid-containing monomer (e.g., acrylic acid and the like) and a salt thereof, acrylamide, styrene, vinyl acetate, and the like.

The method for substantially eliminating the nitrile group or ester group by the hydrolysis reaction and for introducing the carboxyl group in a salt form includes adding a basic aqueous solution of alkaline metal hydroxide, ammonia and the like, or an aqueous solution of an inorganic acid such as nitric acid, sulfuric acid, hydrochloric acid and the like or an organic acid such as formic acid, acetic acid and the like, and heating. When the content of the carboxyl group in a salt form does not reach the lower limit mentioned above, high moisture absorption or discharge cannot be attained.

While the average particle size of the moisture highly absorptive and dischargeable organic fine particles is not particularly limited, it is preferably not more than 5 μm, more preferably not more than 2 μm, in order to increase the moisture absorption and discharge speed, and to achieve a smooth touch and resistance to washing by the adhesion to the surface of a fiber. As used herein, the average particle size is the median diameter when measured using a particle size distribution measuring device of a laser diffraction type and water as a dispersion medium, which is expressed on the basis of volume.

The present invention is characterized by bonding the above-mentioned moisture highly absorptive and dischargeable organic fine particles to the surface of the hydrophobic synthetic fiber by graft polymerization. To adhere the above-mentioned fine particles to a fiber, a resin processing using acrylic resin, urethane resin and the like as a binder is conventionally employed. However, a simple resin processing results in poor resistance to washing. In the present invention, since the graft polymerization processing comprises fixing by chemical bonding on the surface of a fiber, superior durability can be provided.

The graft polymerization processing agent to bind the above-mentioned moisture highly absorptive and dischargeable organic fine particles to the surface of a fiber is preferably an aqueous solution containing a monomer comprising a polyoxyalkylene group and two or more double bonds capable of radical polymerization (hereinafter monomer A). The monomer A is not subject to any particular limitation as long as it comprises a polyoxyalkylene group and two or more double bonds capable of radical polymerization. It preferably contains 3 - 50 (more preferably 7 - 20) polyoxyalkylene groups, and 2 - 5 (more preferably 2 or 3) double bonds capable of radical polymerization, in one molecule. Examples of the monomer A include the compounds of the following formula (1):

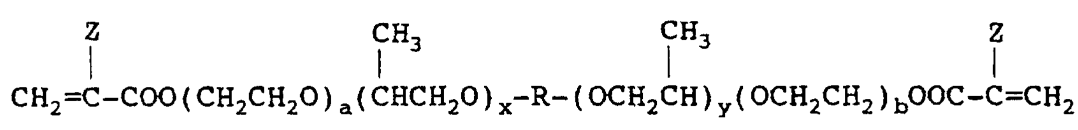 (1)

wherein R is a group of the formula

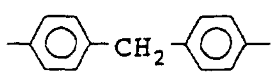 , 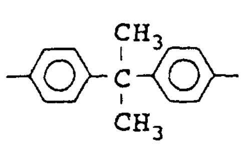 , 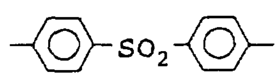 or $-C_nH_{2n}-$

directly bonded, in which n is an integer of 1 to 6, Z is H or $CH_3$, a and b are each 0 or a positive integer and make a+b 0 to 50, and x and y are each 0 or a positive integer and make x+y 0 to 30, provided that a+b+x+y is not less than 10.

Of the compounds of the formula (1), the compounds of the formulas (1)-a and (1)-b are preferable:

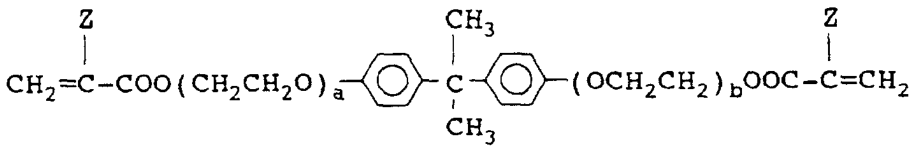

(1)-a

wherein each symbol is as defined above,

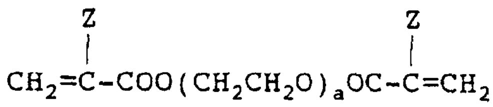

(1)-b

wherein each symbol is as defined above.

Specific examples thereof include the compounds of the formulas (2) to (5) below:

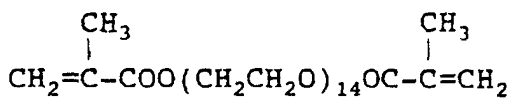

(2)

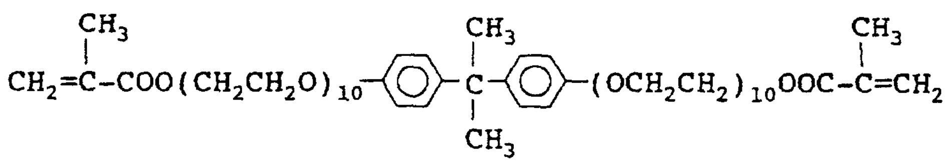

(3)

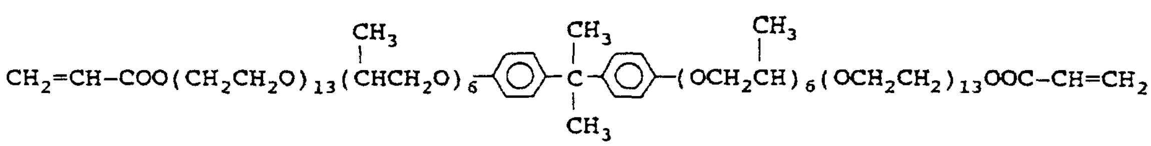

(4)

$$CH_2{=}CH\text{-}COO(CH_2CH_2O)_{23}OC\text{-}CH{=}CH_2 \quad (5)$$

Furthermore, for smooth reaction or firm bonding, at least one monomer from a monomer comprising a double bond capable of radical polymerization and at least one of hydroxyl group, carboxyl group, amino group, sulfonic acid group and phosphoric acid group (hereinafter monomer B), and a monomer comprising an aziridine group (hereinafter monomer C) is preferably added to the above-mentioned aqueous solution. More preferably, both the monomer B and the monomer C are added to the above-mentioned aqueous solution.

The above-mentioned monomer B is not subject to any particular limitation as long as it is a monomer comprising a double bond capable of radical polymerization and at least one of hydroxyl group, carboxyl group, amino group, sulfonic acid group and phosphoric acid group. Examples thereof include acrylic acid, methacrylic acid, styrenesulfonic acid, maleic acid, itaconic acid, crotonic acid, vinylsulfonic acid, 2-allyloxy-2-hydroxypropanesulfonic acid, 2-acrylamide-2-methylpropanesulfonic acid, 2-hydroxyethyl methacrylate, hydroxypropyl methacrylate and the compounds of the following formulas (6) to (8):

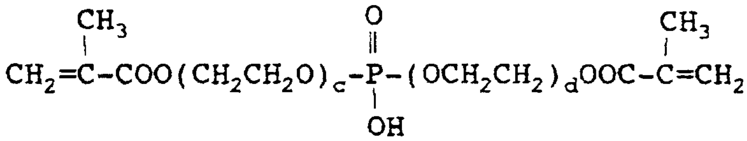 (6)

wherein c+d is an integer of 5 or above,

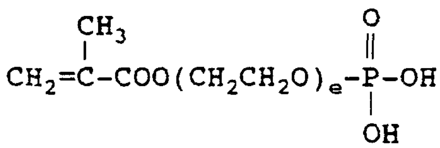 (7)

wherein e is an integer of 1 or above,

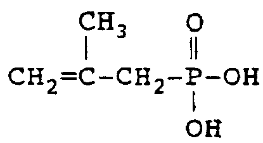 (8)

The above-mentioned monomer C is not subject to any particular limitation as long as it is a monomer comprising an aziridine group. The monomer C also includes a monomer having two or more aziridine groups, besides a monomer comprising one aziridine group. Preferably, the monomer C contains 1 to 3 (preferably 3) aziridine groups in one molecule. Examples of the monomer C include the compounds of the following formulas (9) to (13):

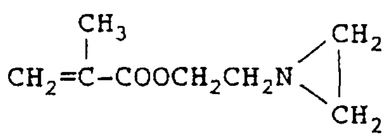 (9)

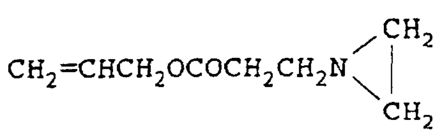 (10)

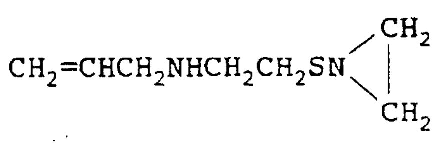 (11)

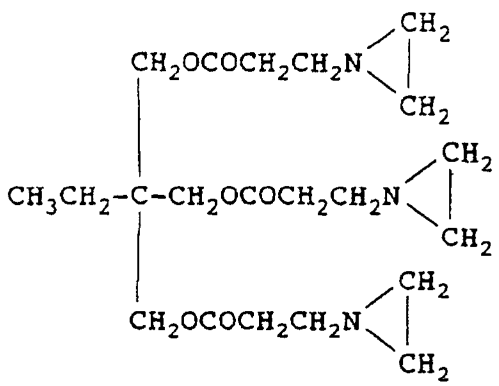

(12)

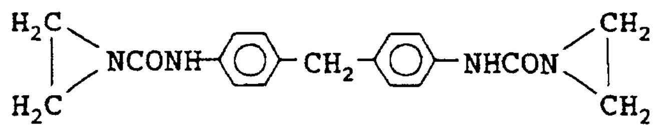

(13)

The above-mentioned graft polymerization processing agent preferably contains moisture highly absorptive and dischargeable organic fine particles in a proportion of 5 - 30 parts by weight (preferably 10 to 20 parts by weight), monomer A in a proportion of 1 - 25 parts by weight (preferably 5 - 15 parts by weight), monomer B in a proportion of 0 - 5 parts by weight (preferably 0.1 - 5 parts by weight, more preferably 0.1 - 3 parts by weight), and monomer C in a proportion of 0.1 - 5 parts by weight (preferably 0.1 - 3 parts by weight), with the rest being a solvent to make the total amount 100 parts by weight. As the solvent, water and a mixed solvent of water and a solvent soluble in water, such as alcohols, dimethyl formamide, acetone, dimethyl sulfoxide and the like, can be used.

The above-mentioned processing agent preferably contains a radical polymerization catalyst. Examples of the radical polymerization catalyst include peroxide polymerization initiation catalyst such as ammonium persulfate, potassium persulfate and the like and water soluble azo radical polymerization catalyst. The radical polymerization catalyst is preferably contained in the processing agent in a proportion of 0.1 - 3 wt% (preferably 0.1 - 1.0 wt%). When the amount thereof is less than 0.1 wt%, the reaction may become insufficient and an amount exceeding 3 wt% is economically disadvantageous.

The above-mentioned processing agent is applied to the above-mentioned cloth by a roller padding method, an exhaustion dyeing method, a spray method and the like. For graft polymerization after applying the processing agent, a dry heating treatment, a wet heating treatment, or irradiation of UV light, microwave or electron beam is performed. Particularly preferable method is a wet heating treatment including graft polymerization with heating steam. Specifically, polymerization reaction is preferably carried out using a continuous wet heating treatment apparatus at a reaction temperature of 100 - 130°C (preferably 110°C), a humidity of not less than 95% (preferably not less than 99%) for a reaction time of 3 - 60 min (preferably 10 min).

The moisture absorptive and dischargeable cloth of the present invention obtained above preferably comprises the above-mentioned moisture highly absorptive and dischargeable organic fine particles in a proportion of 0.5 - 10 wt% of the weight of the fiber. It is preferable that the amount to be attached of the above-mentioned graft polymer be 0.5 - 10 wt% of the weight of the fiber, in order to bond the moisture highly absorptive and dischargeable organic fine particles to the surface of the fiber. The amount of the moisture highly absorptive and dischargeable organic fine particles attached is an important factor relating to the moisture absorption of the cloth. As mentioned below, it is preferably 0.5 - 10 wt% of the weight of the fiber, in order to achieve the effect of moisture absorption and discharge as evidenced by the moisture absorption at 30°C, 90% RH, which is higher by not less than 2% before washing and not less than 1.5% after 20 times of washing, than an unprocessed cloth. When the amount to be attached of the moisture highly absorptive and dischargeable organic fine particles is less than 0.5 wt%, the cloth shows a less increase in the absorption effect, whereas when it exceeds 10 wt%, the feel of the cloth is degraded. The amount to be attached of the moisture highly absorptive and dischargeable organic fine particles is preferably 1 wt% at the lower limit and 6 wt% at the upper limit. When the amount to be attached of the graft polymer is less than 0.5 wt%, moisture highly absorptive and dischargeable organic fine particles cannot be sustained long enough, which in turn makes it difficult to ensure sufficient resistance to washing, whereas when it exceeds 10 wt%, the feel is degraded.

The amounts to be attached of the moisture highly absorptive and dischargeable organic fine particles and the graft polymer are each calculated based on the rate of the weight gain relative to an unprocessed cloth and the

weight ratio of the moisture highly absorptive and dischargeable organic fine particles and monomer in the graft polymerization processing agent.

The moisture absorptive and dischargeable cloth of the present invention preferably shows the moisture absorption at 30°C, 90% RH, which is higher by not less than 2% before washing and not less than 1.5% after 20 times of washing, than an unprocessed cloth containing the hydrophobic synthetic fiber in a proportion of not less than 60 wt%. That is, when a cloth of the present invention having the above-mentioned moisture highly absorptive and dischargeable organic fine particles attached thereto and an unprocessed cloth without such moisture highly absorptive and dischargeable organic fine particles are compared in terms of the moisture absorption before washing, the difference is not less than 2%, and when the both cloths are compared after measuring the moisture absorption after 20 times of washing, the difference is preferably not less than 1.5%.

As used herein, by the washing is meant that according to JIS L0217 103.

The moisture absorptive and dischargeable cloth of the present invention preferably shows moisture absorption and discharge (ΔW) of not less than 1.0, which is the difference between moisture absorption under a 20°C, 65% RH environment and that under a 30°C, 90% RH environment.

The moisture absorptive and dischargeable cloth of the present invention can be preferably used to make various clothings including outerwear such as tops (e.g., windbreaker, parka, jacket and the like), bottoms (e.g., pants, skirt and the like), coat, gown, dress and the like; inner wear such as lingerie, foundation and the like; and shirt, blouse and the like. The outerwear includes formalwear such as dress suit, mourning etc., the Middle East racial clothings (for men) such as thobe, suiting etc., the Middle East racial clothings (for women) such as chador, abaya, tarha etc., and the like.

For the above-mentioned outerwear, the moisture absorptive and dischargeable cloth contains, where necessary, a water repellent such as fluororesin, silicone resin, ethyleneurea resin, various waxes and the like. The water repellent can be added simultaneously with the addition of a graft polymerization processing agent, or can be added by an optional method such as padding, spraying and the like as a separate step after the graft polymerization processing. The amount of addition of the water repellent is suitably adjusted by appropriately changing the concentration of a solution, the amount to be picked up and a mangle pressure, to avoid too much application, which would result in the formation of a thin film of the water repellent to cover the surface of the cloth, degrading the moisture absorption and discharge properties.

The cloth constituting the outerwear may be a woven fabric or a knitted fabric depending on the use. When it is particularly a woven fabric, the weave may be a three-foundation weave such as plain weave, twill weave, satin weave and the like, or a derivative weave which is a combination of these. In consideration of service life such as the resistance to friction and the like, a plain weave is preferable.

For outerwear uses, the total of the warp and weft cover factor values (CF value) of the woven fabric is preferably 1500 - 3500, and 2200 - 3500 particularly for outer uses of sport and casual outfits. When the cover factor value is less than 1500, slip and seam slippage easily occur, whereas when it exceeds 3500, the tear strength decreases and the drape property of the cloth is degraded, which makes the use of the cloth for outerwear impractical. The total of the warp and weft cover factor values (CF value) is calculated by the following formula.

$$\text{total of the warp and weft CF values} = \sqrt{(\text{warp yarn fineness (dtex)})} \times \text{fabric warp yarn density (ends/2.54 cm)} + \sqrt{(\text{weft yarn fineness (dtex)})} \times \text{fabric weft yarn density (picks/2.54 cm)}$$

In the outerwear uses of sport and casual outfits, particularly for sport outfit use, the tear strength and water pressure resistance as property values are required to be high. To meet the requirement, the tear strength is preferably not less than 9.8 N, and the water pressure resistance is preferably not less than 9.8 kPa (not less than 1000 water column mm).

The water repellency should be imparted particularly to windbreaker, windjacket and coat. The water repellency according to 1998 JIS L1092 is preferably not less than grade 5 before washing, and not less than grade 4 after 20 times of washing.

The moisture absorptive and dischargeable cloth of the present invention can be suitably used for formalwear, as mentioned above. The formalwear means dress suit, mourning and the like represented by evening dress, afternoon dress, morning dress, tuxedo, swallow-tailed suit and the like. Because these are usually dyed in deep black, which is often expressed as coal-black or raven, they easily absorb heat, particularly in a high humidity and high temperature environment during summer, the rainy season and the like. In addition, because they are made of a relatively tightly-woven fabric, the discharge of heat or moisture is structurally difficult. Thus, the use of the moisture absorptive and

dischargeable cloth of the present invention is particularly advantageous.

Moreover, the moisture absorptive and dischargeable cloth of the present invention can be suitably used for inner wear including lingerie, foundation and the like.

The moisture absorptive and dischargeable cloth of the present invention can be also suitably used for dust free garment. A dust free garment or clean wear is a workwear free of dust and worn by those engaged in work operation in a clean room for the production and assembly of precision instrument, food processing business, semiconductor production and the like.

The dust free garment should not allow discharge of sweat, other excrement, sebaceous matter, cortex from the body, waste fiber and fiber dust from underclothings and the like into the work environment, and should not produce dust from itself. Thus, when the moisture absorptive and dischargeable cloth of the present invention is used for dust free garment, the cloth is preferably constituted of hydrophobic synthetic fiber multifilaments. By the use of the hydrophobic synthetic fiber multifilament and by binding the above-mentioned moisture highly absorptive and dischargeable organic fine particles to the surface of the fiber by graft polymerization, dust free garment can be obtained, which produces dust from itself only at a very low level, and which is superior in resistance to washing, provides a soft touch during use and which is free of uncomfortableness during work operation, because it keeps the humidity within clothings during use within a comfortable range due to the moisture highly absorptive and discharging property of the cloth.

The amount of the dust as a basic property of a dust free garment is evaluated according to the tumbling method described in 1997 JIS B9923. The dust free garment of the present invention preferably produces less than 35000 particles/$m^3$ of particles having a size of not less than 0.3 μm. More particularly, the amount of less than 10000 particles/$m^3$ before washing, less than 28000 particles/$m^3$, more preferably less than 20000 particles/$m^3$, after 20 times of washing and after 50 times of washing is preferable. The amount exceeding these ranges disqualifies the dust free garment.

In the present invention, the back of the cloth is preferably subjected to a plast calendar treatment to fill up the textile weave, thereby to enhance the dust trapping effect of the dust free garment.

Furthermore, prevention of dust absorption due to static electricity is desired as a required property of a dust free garment. This is indispensable for preventing the dust in the air from adhering to clothings, which is caused by the action of static electricity, thereby to prevent pollution of the work place. In the use for dust free garment associated with repeat washing and frequent sterilization, durability is particularly required. To meet the requirement, the dust free garment of the present invention preferably shows an initial value of frictional static voltage in a 20°C × 40% RH environment of not more than 1000 V before washing, and not more than 2000 V after 50 times of washing, as evaluated according to 1997 JIS L1094. When the voltage exceeds the above ranges, the work environment in a clean room is highly likely contaminated.

To improve antistatic property, a conductive fiber using carbon black and a low melting point metal as the core part of a core sheath composite yarn may be contained in a part of the cloth. In this case, the conductive fiber preferably shows a specific resistance of about $1 \times 10^3$ - $10^5$ Ω·cm in the air at 20°C × 30% RH.

The moisture absorptive and dischargeable cloth of the present invention is preferably used for the lining of clothings. In general, when a lining is made of a hydrophobic synthetic fiber, it tends to produce static electricity and show poor water absorption property. Consequently, the lining easily clings to the skin and gives a sense of stickiness. When the moisture absorptive and dischargeable cloth of the present invention is used for the lining, this problem can be overcome with the high moisture absorption and discharge properties.

The lining of the present invention, particularly a polyester lining made of a polyester synthetic fiber multifilament, desirably shows a frictional static voltage according to 1997 JIS L1094 under a 20°C, 40% RH environment of not more than 500 V before washing, and not more than 2000 V, more preferably less than 1500 V, after 20 times of washing, to achieve smoothness while it is worn. When the frictional static voltage exceeds 2000 V, discharge and clinging to the skin are particularly found in a low humidity environment in winter, thus making wearing uncomfortable.

The moisture absorptive and dischargeable cloth of the present invention can be preferably used as a fabric for night clothings or bed clothings. The fabric for night clothings or bed clothings is used as a fabric for bedding, mattress etc., night clothing small articles such as pillow, sheet, covers etc., and the like, inclusive of an inside bag of bedding. When the cloth of the present invention is used as a fabric for night clothings or bed clothings, it quickly absorbs moisture and heat between the night clothings and bed clothings/human body and discharges the moisture and heat into the air and batting. In this way, the temperature and humidity can be controlled by the action of its high moisture absorption and discharge properties. Consequently, sweatiness and stickiness can be suppressed, and a smooth touch is afforded. Therefore, even when the batting is made of a chemical fiber such as polyester and the like, sweatiness and the degradation of heat retaining property can be prevented. In addition, since it is superior in resistance to washing and resistance to friction, the moisture absorption and discharge properties can be maintained for a long time.

As the basic property of a fabric for night clothings or bed clothings, particularly when it is used as a fabric for bedding and inside bag of the bedding, the textile weave on the back of the cloth is preferably filled up by a plast

calendar treatment, whereby extrusion of the batting, such as feather, fur, cotton and the like, can be prevented. The plast calendar treatment is preferably applied before dyeing and the above-mentioned graft polymerization to prevent degradation of color fastness.

The fabric for night clothings or bed clothings desirably shows air permeability according to JIS L1096 A (Frazier method) of not more than 2.0 cc/cm$^2$/sec, preferably not more than 1.6 cc/cm$^2$/sec, before washing. With this level of air permeability, extrusion of the batting can be suppressed and a tick protection effect is also expected from the highly dense weaving. When the air permeability considerably exceeds 2.0 cc/cm$^2$/sec, the batting easily extrudes and fails to function as a fabric for bedding or a bedding inside bag. In addition, ticks and other harmful insects easily pass through the cloth, which is unpreferable from the aspect of hygiene.

The present invention is explained in detail in the following by referring to examples. The present invention is not limited by these examples in any way.

The properties and performance of the moisture highly absorptive and dischargeable organic fine particles, cloths and clothings in the following examples were evaluated according to the following methods.

<u>nitrogen increase</u>

The nitrogen increase in the moisture highly absorptive and dischargeable organic fine particles was calculated from the difference between the nitrogen content (in wt% based on fine particles) of the starting material (acrylonitrile polymer fine particles) and the nitrogen content (in wt% based on fine particles) of hydrazine-crosslinked acrylonitrile polymer fine particles as measured with a CHN elemental analysis apparatus.

<u>content of carboxyl group in a salt form</u>

The content (mmol/g) of the carboxyl group in a salt form was obtained by determining the amounts of carboxyl group and carboxylic acid by titration and subtracting the amount of carboxylic acid from the amount of carboxyl group, according to the measurement method of the content of the carboxyl group in a salt form as described in USP 5,691,421.

<u>average particle size</u>

The average particle size of moisture highly absorptive and dischargeable organic fine particles was measured using a particle size distribution measuring device of a laser diffraction type (SALD 2000; Shimadzu Corporation) and water as a dispersion medium, and expressed on the basis of volume, wherein the median diameter is defined as the average particle size.

<u>moisture absorption</u>

The moisture absorption H was calculated by the following formula:

$$H = \{(H1 - H0)/H0\} \times 100\ (\%)$$

wherein H0 is absolute dry weight, which is the weight after drying the sample at 120°C for 3 h, and H1 is a moisture absorption weight, which is the weight after moisture control by standing the sample under a predetermined temperature and humidity atmosphere for not less than 6 h after the above-mentioned drying. The temperature and humidity atmosphere was set for 30°C, 90% RH corresponding to the condition in clothings or 20°C, 65% RH corresponding to the condition of the air.

<u>moisture absorption and discharge (ΔW)</u>

This value is a difference between moisture absorption under a 20°C, 65% RH environment and that under a 30°C, 90% RH environment and can be calculated from the following formula, wherein the value is an average of 5 repeats of the test:

$$\Delta W = \text{(rate of weight gain when stood at 30°C, 90\% RH for 24 h)} -$$

(rate of weight gain when stood at 20°C, 65% RH for 24 h)

water absorption

Measured according to JIS L1096 6-26-1 A (titration).

antifouling property

Measured according to a Dia paste method (Japan Chemical Fibers Association standard JCFA TM-104).

moisture absorption-heat generation-temperature rise

A sample after moisture control at 20°C, 40% RH was cast in a 20°C, 90% RH environment and changes in the temperature of the surface of the cloth for 20 min after casting were measured with a temperature sensor (Model 513E; ANRITSU METER CO., LTD.).

changes in temperature during moisture absorption-heat generation/moisture discharge-cooling

A sample after moisture control at 20°C, 40% RH was cast in a 20°C, 90% RH environment, returned into a 20°C, 40% RH environment 10 min after casting, and the temperature of the surface of the cloth 20 min after casting was measured with a temperature sensor (Model 513E; ANRITSU METER CO., LTD.).

pilling resistance

Measured according to 1992 JIS L1076 A method (method using ICI tester).

seam slippage resistance

Measured according to 1999 JIS L1096 B method at a load of 117.68 N.

frictional static voltage

Measured according to 1997 JIS L1094 under a 20°C, 40% RH environment.

tear strength

Measured according to 1999 JIS L1096 D method (pendulum method).

water pressure resistance

Measured according to 1998 JIS L1092 A method (low water pressure method) and using a water-pressure gauge (manometer).

water repellency

Measured according to 1998 JIS L1092 (spray test).

amount of dust produced

According to 1997 JIS B9923 (dust production apparatus: tumbling method), a light diffraction particle autocounter (1997 JIS B9921) was used to measure the amount (particles/$m^3$) of dust (particles having a size of not less than 0.3 μm) produced by the sample before washing, after 20 times of washing, and after 50 times of washing.

temperature and humidity in clothing

Measured using a weather-within-clothings simulation apparatus described in JP-A-10-332683. The outline and measurement conditions of the weather-within-clothings simulation apparatus are as follows.
The apparatus consists of a heat generating perspiration mechanism including a substrate having a perspiration hole and a heat generator, a water supplying mechanism to supply water to the perspiration hole, a heat generation control mechanism to control the temperature of the heat generator, and a temperature and humidity sensor.

The substrate is made of brass and has an area of 120 $cm^2$. It has 6 perspiration holes, and is controlled to a certain temperature by a heat generator consisting of a planar heater. The water supplying mechanism feeds a certain amount of water to the perspiration hole of the substrate with a tube pump. A 0.1 mm - 0.6 mm thick dummy skin made of a polyester multifilament woven fabric is adhered to the surface of the substrate to allow water discharged from the perspiration hole to spread over the entire substrate surface, whereby a perspiration state is produced. The substrate has a 1 cm high outer frame surrounding itself, and a sample (cloth) can be set at a distance of 1 cm from the substrate. The temperature and humidity sensor is set in the space between the substrate and the sample (cloth) and measures the temperature and humidity of the space enclosed by the substrate and the sample when the substrate is perspiring, which is taken as the temperature and humidity within clothing. The measurement conditions are 20°C, environmental humidity 65% RH, substrate temperature 37°C, amount of perspiration 245 $g/m^2/hr$ and sweating time 3 min.

air permeability

According to 1998 JIS L1096 A method (Frazier method), the amount of the air ($cc/cm^2/sec$) passing through a test piece was measured (rounded to one decimal place). The measurement value was an average of 5 repeats of the test. The measurement was performed in a 20 ± 2°C, 65 ± 2% RH thermostat and humidistat environment.

color fastness to light

Measured according to JIS L0842 by irradiation with a carbon arc lamp.

L value

Measured according to JIS Z8722 and JIS Z8729 and using Hunter's colorimeter (TOKYO DENSHOKU Co., Ltd.).

**Example 1**

(1) production of moisture highly absorptive and dischargeable organic fine particles I

Acrylonitrile (450 parts by weight), methyl acrylate (40 parts by weight), sodium p-styrenesulfonate (16 parts by weight) and water (1181 parts by weight) were charged in an autoclave, and di-tert-butyl peroxide was added as a polymerization initiator in a proportion of 0.5 wt% of the entire amount of the monomer. The autoclave was sealed and polymerization was carried out with stirring the mixture at 150°C for 20 min. After the completion of the reaction, the reaction mixture was cooled to about 90°C with continuous stirring to give an aqueous dispersion of the starting material fine particles having an average particle size of 2 μm.

Hydrazine was added to make the concentration of this aqueous dispersion in bath 35 wt% to conduct crosslinking treatment at 102°C for 2.5 h, and then NaOH was added to make the concentration in bath 10 wt% to allow hydrolysis at 102°C for 5 h. The reaction mixture was subjected to dialysis in running water for desalting, and drying to give moisture highly absorptive and dischargeable organic fine particles I.

The obtained moisture highly absorptive and dischargeable organic fine particles I showed a nitrogen increase of 3.3 wt%, an amount of the carboxyl group in Na salt form of 4.3 mmol/g, a moisture percentage at 65% RH (20°C) of 45 wt%, and an average particle size of 2 μm. The moisture percentage of the organic fine particles after standing at 70°C for 12 h and standing in a desiccator at 65% RH (20°C) for 10 min was 10 wt%, which was 45 wt% after 24 h. The moisture percentage of the particles after standing in a desiccator at 90% RH (20°C) for 24 h was 56 wt%, after which the particles were stood in a desiccator at 40% RH (20°C) for 1 h and the moisture percentage then was measured to be 28 wt%, the results confirming the moisture absorption and discharge properties.

(2) graft polymerization processing agent

| | |
|---|---|
| moisture highly absorptive and dischargeable organic fine particles I obtained in (1) | 20 parts by weight |
| monomer A : compound of the above-mentioned formula (3) | 10 parts by weight |
| monomer B : methacrylic acid | 1 part by weight |
| monomer C : compound of the above-mentioned formula (12) | 2 parts by weight |
| radical polymerization catalyst: ammonium persulfate | 1 part by weight |
| water | 66 parts by weight |

(3) production of moisture absorptive and dischargeable cloth

Using a 78 dtex/216 filament polyester false-twist textured yarn for both the warp yarn and the weft yarn, taffeta made of polyester fiber (100%) was woven. This taffeta fabric using a polyester false-twist textured yarn was subjected to relax scouring→presetting→alkali decreasing processing→dyeing (white) by conventional methods. Then, the graft polymerization processing agent of the above-mentioned (2) was applied at an impregnation rate of 50 wt% by a padding method. After drying, polymerization was conducted in a continuous wet heating treatment apparatus at reaction temperature 110°C, humidity not less than 99%, and reaction time 10 min (hereinafter this polymerization step is referred to as steaming). Finish setting gave a cloth made of 100% polyester false-twist textured yarn taffeta superior in moisture absorption and discharge.

The obtained cloth was evaluated for properties before washing, after 10 times of washing and 20 times of washing. The results of moisture absorption, moisture absorption and discharge, and water absorption and antifouling property are shown in Table 1, the results of moisture absorption-heat generation-temperature rise are shown in Figure 1, and changes in temperature during moisture absorption-heat generation/moisture discharge-cooling are shown in Figure 2.

**Comparative Example 1**

The same taffeta fabric made of the polyester false-twist textured yarn as used in Example 1 was subjected to relax scouring→presetting→alkali decreasing processing→dyeing (white)→finish setting by conventional methods to give a cloth made of 100% polyester false-twist textured yarn taffeta. The obtained cloth was evaluated for properties before washing, and after 10 times of washing and 20 times of washing. The results of moisture absorption, moisture absorption and discharge, water absorption and antifouling property are shown in Table 1, the results of moisture absorption-heat generation-temperature rise are shown in Figure 1, and changes in temperature during moisture absorption-heat generation/moisture discharge-cooling are shown in Figure 2.

Table 1

| | | | Example 1 | Comparative Example 1 |
|---|---|---|---|---|
| moisture absorption (%) | 20°C, 65% RH | before washing | 1.06 | 0.30 |
| | | after washing 10 times | 1.07 | 0.35 |
| | | after washing 20 times | 0.98 | 0.36 |
| | 30°C, 90% RH | before washing | 2.77 | 0.41 |
| | | after washing 10 times | 2.26 | 0.40 |
| | | after washing 20 times | 2.16 | 0.39 |
| moisture absorption and discharge ΔW (g/g × 100) 20°C, 65% RH↔30°C, 90% RH | | before washing | 1.71 | 0.11 |
| | | after washing 10 times | 1.18 | 0.05 |
| | | after washing 20 times | 1.18 | 0.03 |
| water absorption (sec) | | before washing | 23 | 15 |
| | | after washing 10 times | 40 | 32 |
| | | after washing 20 times | 40 | 43 |
| antifouling property (grade) | | before washing | 2-3 | 1 |
| | | after washing 10 times | 2-3 | 1 |
| | | after washing 20 times | 2-3 | 1 |

**Example 2**

Using a 83 dtex/36 filament polyester false-twist textured yarn, a 28 gauge interlock knitted fabric was produced. The interlock knitted fabric made of the polyester false-twist textured yarn was subjected to relax scouring→presetting→dyeing (white) by conventional methods, and the same graft polymerization processing agent as used in Example 1 was applied at an impregnation rate of 80 wt% by a padding method. The fabric was subjected to drying→steaming→finish setting to give a cloth made of 100% polyester false-twist textured yarn interlock knitted fabric superior

in moisture absorption and discharge. The obtained cloth was evaluated for properties before washing and after 20 times of washing. The results of moisture absorption, moisture absorption and discharge, water absorption and antifouling property are shown in Table 2, the results of moisture absorption-heat generation-temperature rise are shown in Figure 3, and changes in temperature during moisture absorption-heat generation/moisture discharge-cooling are shown in Figure 4.

**Comparative Example 2**

The same knitted fabric made of the polyester false-twist textured yarn as used in Example 2 was subjected to relax scouring→presetting→dyeing (white)→finish setting by conventional methods to give a cloth made of 100% polyester false-twist textured yarn interlock knitted fabric. The obtained cloth was evaluated for properties before washing and after 20 times of washing. The results of moisture absorption, moisture absorption and discharge, water absorption and antifouling property are shown in Table 2, the results of moisture absorption-heat generation-temperature rise are shown in Figure 3, and changes in temperature during moisture absorption-heat generation/moisture discharge-cooling are shown in Figure 4.

Table 2

| | | | Example 2 | Comparative Example 2 |
|---|---|---|---|---|
| moisture absorption (%) | 20°C, 65% RH | before washing | 1.82 | 0.36 |
| | | after washing 20 times | 1.67 | 0.39 |
| | 30°C, 90% RH | before washing | 4.94 | 0.55 |
| | | after washing 20 times | 3.49 | 0.52 |
| moisture absorption and discharge ΔW (g/g x 100) 20°C, 65% RH↔30°C, 90% RH | | before washing | 3.13 | 0.19 |
| | | after washing 20 times | 1.82 | 0.14 |
| water absorption (sec) | | before washing | instantaneous | 125 |
| | | after washing 20 times | instantaneous | 180 or above |
| antifouling property (grade) | | before washing | 3-4 | 1 |
| | | after washing 20 times | 3-4 | 1 |

**Example 3**

Using a 83 dtex/36 filament polyester false-twist textured yarn for the surface of a 22 gauge double knitted fabric, and a 83 dtex/36 filament polyester false-twist textured yarn and a mixed spun yarn No. 45 of polyester/cotton (65/35) were alternately knitted to give a Mock rodier knitted fabric for the back. The knitted fabric showed a weight ratio of polyester/cotton of 85/15. The polyester/cotton blended Mock rodier knitted fabric was subjected to relax scouring→presetting→dyeing (black) by conventional methods and then the same graft polymerization processing agent as used in Example 1 was applied at an impregnation rate of 80 wt% by a padding method. The fabric was subjected to drying→steaming→reduction clearing→finish setting to give a cloth made of polyester/cotton blended Mock rodier knitted fabric superior in moisture absorption and discharge. The obtained cloth was evaluated for properties before washing and after 20 times of washing. The results of moisture absorption, moisture absorption and discharge, and water absorption are shown in Table 3, the results of moisture absorption-heat generation-temperature rise are shown in Figure 5, and changes in temperature during moisture absorption-heat generation/moisture discharge-cooling are shown in Figure 6. The water absorption was measured for both the surface and the back of the cloth.

**Comparative Example 3**

The same polyester/cotton blended Mock rodier knitted fabric as used in Example 3 was subjected to relax scouring→presetting→dyeing (black)→reduction clearing-finish setting by conventional methods to give a cloth made of a polyester/cotton blended Mock rodier knitted fabric. The obtained cloth was evaluated for properties before washing and after 20 times of washing. The results of moisture absorption, moisture absorption and discharge, and water absorption are shown in Table 3, the results of moisture absorption-heat generation-temperature rise are shown in Figure 5, and changes in temperature during moisture absorption-heat generation/moisture discharge-cooling are shown in

Figure 6.

Table 3

| | | | Example 3 | Comparative Example 3 |
|---|---|---|---|---|
| moisture absorption (%) | 20°C, 65% RH | before washing | 2.34 | 0.98 |
| | | after washing 20 times | 2.37 | 1.07 |
| | 30°C, 90% RH | before washing | 5.50 | 1.54 |
| | | after washing 20 times | 4.71 | 1.65 |
| moisture absorption and discharge ΔW (g/g x 100) 20°C, 65% RH↔30°C, 90% RH | | before washing | 3.16 | 0.56 |
| | | after washing 20 times | 2.34 | 0.58 |
| water absorption (sec) | surface | before washing | instantaneous | 18 |
| | | after washing 20 times | instantaneous | 0.4 |
| | back | before washing | instantaneous | 18 |
| | | after washing 20 times | instantaneous | 0.4 |

As is evident from Tables 1 - 3 and Figures 1 - 6, the cloths obtained in Examples 1 - 3, wherein moisture highly absorptive and dischargeable organic fine particles I were graft-processed, showed a difference in moisture absorption at 30°C × 90% RH of not less than 1.5% before washing and not less than 2.0% after 20 times of washing, relative to the unprocessed products of Comparative Examples 1 - 3, and showed superior moisture absorption-heat generation-temperature rise property and moisture absorption-heat generation/moisture discharge-cooling property. Consequently, they showed decreased sweatiness and stickiness, and a smooth touch. In contrast, the unprocessed products of Comparative Examples 1 - 3 showed low moisture absorption and poor moisture absorption-heat generation-temperature rise property and moisture absorption-heat generation/moisture discharge-cooling property, thus failing to achieve the desired properties. The cloths of Examples 1 - 3 did not impair aesthetic aspects or functions, such as softness, color and gloss, of a hydrophobic synthetic fiber.

**Example 4 : outerwear**

Using a draw false-twisting machine (LS-6; MITSUBISHI HEAVY INDUSTRIES., LTD.) for polyester multifilament semi-dull (78 dtex/216 filament), false-twisting processing was applied at a yarn excess supply to the twisting area of +2.0%, false-twisting number of (Z→S) of 3400 twists/m, and a heat treatment temperature of the twisting area (first heater temperature) of 200°C, using a sapphire pin having an eccentricity of 2.0 ϕ (Heberlein), and at a second heater temperature of 25°C (room temperature). The false-twisted yarn was subjected to additional twisting (240 twists/m) in the Z-twist direction by double twister DT302 (manufactured by Murata Machinery, Ltd.) and sized with a sizer to give a warp beam.

The weft yarn was obtained by combining two of the false-twist textured yarn used for the warp yarn by supplying them at the same rate to give a 156 dtex/432 filament false-twist textured yarn, and applying an additional twisting (77 twists/m) in the Z-twist direction.

Using a water jet loom, the yarns were woven into a plain weave having a density from loom of warp 54 ends/cm, weft 34 picks/cm.

This plain woven cloth was subjected to scouring · relaxing and presetting by conventional methods, and then to calendar treatment of the back by plast calendar, and dyeing with a dispersion dye (high pressure dyeing at 130°C), which was followed by reduction clearing, dehydration and drying. In the same manner as in Example 1, a graft polymerization processing agent was applied at an impregnation rate of 50 wt% by a padding method. After drying and steaming, a water repellent resin (silicone resin) was applied in a dry state by a padding dry method, which was followed by finish setting. The finishing density was warp 55 ends/cm, weft 35 picks/cm, and the total of the CF values of warp and weft was 2320.

The obtained cloth was evaluated for properties before washing and after 20 times of washing. The results of moisture absorption, moisture absorption and discharge, antifouling property, pilling resistance, seam slippage resistance, frictional static voltage, tear strength, water pressure resistance and water repellency are shown in Table 4. The results of moisture absorption-heat generation-temperature rise and changes in temperature during moisture absorption-heat generation/moisture discharge-cooling showed the same pattern as the patterns obtained in Examples

1 - 3.

Using the above-mentioned cloth, a windbreaker was produced. It was comfortable to wear and was free of sweatiness or clinging to the skin during wearing, giving a smooth touch. When compared to a conventional windbreaker made of a polyester fiber, it gave a more comfortable feel during use.

**Comparative Example 4 : outerwear**

The plain woven cloth used in Example 4 was subjected to scouring · relaxing and presetting by conventional methods, and then to calendar treatment of the back by plast calendar and dyeing with a dispersion dye (high pressure dyeing at 130°C), which was followed by reduction clearing. After dehydration and drying, a water repellent resin (silicone resin) was applied in a dry state by a padding dry method, which was followed by finish setting. The finishing density was warp 55 ends/cm, weft 35 picks/cm, and the total of the CF values of warp and weft was 2320.

The obtained cloth was evaluated for properties before washing and after 20 times of washing. The results of moisture absorption, moisture absorption and discharge, antifouling property, pilling resistance, seam slippage resistance, frictional static voltage, tear strength, water pressure resistance and water repellency are shown in Table 4. The results of moisture absorption-heat generation-temperature rise and changes in temperature during moisture absorption-heat generation/moisture discharge-cooling showed the same pattern as the patterns obtained in Comparative Examples 1 - 3.

Using the above-mentioned cloth, a windbreaker was produced. It gave sweatiness and stickiness during wearing. With repeat washing at home, clinging to the skin grew to the level of discomfort. Thus, it was not preferable for the production of a windbreaker.

Table 4

| | | | Example 4 | Comparative Example 4 |
|---|---|---|---|---|
| moisture absorption (%) | 20°C, 65% RH | before washing | 1.2 | 0.3 |
| | | after washing 20 times | 1.0 | 0.4 |
| | 30°C, 90% RH | before washing | 3.0 | 0.5 |
| | | after washing 20 times | 2.3 | 0.5 |
| moisture absorption and discharge ΔW (g/g × 100) | | before washing | 1.8 | 0.2 |
| | | after washing 20 times | 1.3 | 0.1 |
| antifouling property (grade) | | before washing | 4 | 3 |
| | | after washing 20 times | 3-4 | 2-3 |
| pilling resistance (grade) | | before washing | 5 | 5 |
| | | after washing 20 times | 5 | 5 |
| seam slippage resistance (mm) | | before washing | 1.2 | 1.1 |
| | | after washing 20 times | 1.0 | 0.8 |
| frictional static voltage (V) | | before washing | 400 | 3800 |
| | | after washing 20 times | 500 | 5000 |
| tear strength (N) | | before washing | 11.2 | 12.0 |
| | | after washing 20 times | 10.9 | 11.5 |
| water pressure resistance (kPa) | | before washing | 10.5 | 9.8 |
| | | after washing 20 times | 10.2 | 9.6 |
| water repellency (grade) | | before washing | 5 | 4-5 |
| | | after washing 20 times | 4-5 | 4 |

**Example 5: formalwear**

As a warp yarn, a polyester multifilament different shrinkage mixtured filament yarn (190 dtex/42 filament)

was twisted (1400 twists/m) in the S-twist and Z-twist directions, and warping was performed to make two S-twist and Z-twist yarns alternately warped. As the weft yarn, the same yarn as the warp yarn was used and two S-twist and Z-twist yarns were alternately woven using a water jet loom to give a back satin crepe weave (one complete weave consisting of warp 480 ends x weft 480 picks).

This woven cloth was subjected to scouring · relaxing, presetting, and dyeing with a dispersion dye (formal black, liquid flow dyeing at a dyeing temperature of 135°C) by conventional methods. In the same manner as in Example 1, a graft polymerization processing agent was applied at an impregnation rate of 50 wt% by a padding method. By drying→steaming→finish setting, a polyester cloth superior in moisture absorption and discharge was obtained. The finishing density was warp 179 ends/2.54 cm, weft 93 picks/2.54 cm.

The obtained cloth was evaluated for properties before washing and after 20 times of washing. The results of moisture absorption, moisture absorption and discharge, water absorption, antifouling property, frictional static voltage, pilling resistance and seam slippage resistance are shown in Table 5. The results of moisture absorption-heat generation-temperature rise and changes in temperature during moisture absorption-heat generation/moisture discharge-cooling showed the same pattern as the patterns obtained in Examples 1 - 3.

The above-mentioned cloth was used to make a one-piece morning dress for women. The dress was comfortable to wear and gave a smooth touch without sweatiness during wearing, thereby confirming an improved comfortableness during wearing as compared to conventional morning dress.

**Comparative Example 5 : formalwear**

The woven cloth used in Example 5 was subjected to scouring • relaxing, presetting and dyeing with a dispersion dye by conventional methods. An aqueous solution containing 1 wt% of an antistatic agent (NICEPOLE NF-20; NICCA CHEMICAL CO., LTD.) and 0.5 wt% of a softening agent (NICCA SILICONE N-154; NICCA CHEMICAL CO., LTD.) was padded in a wet state, which was followed by drying→finish setting. The finishing density was warp 179 ends/2.54 cm, weft 93 picks/2.54 cm.

The obtained cloth was evaluated for properties before washing and after 20 times of washing. The results of moisture absorption, moisture absorption and discharge, water absorption, antifouling property, frictional static voltage, pilling resistance and seam slippage resistance are shown in Table 5. The results of moisture absorption-heat generation-temperature rise and changes in temperature during moisture absorption-heat generation/moisture discharge-cooling showed the same pattern as the patterns obtained in Comparative Examples 1 - 3.

The above-mentioned cloth was used to make a one-piece morning dress for women. The dress gave sweatiness and stickiness during wearing and was discomfortable to wear.

Table 5

| | | | Example 5 | Comparative Example 5 |
|---|---|---|---|---|
| moisture absorption (%) | 20°C, 65% RH | before washing | 1.6 | 0.5 |
| | | after washing 20 times | 1.4 | 0.3 |
| | 30°C, 90% RH | before washing | 3.3 | 0.6 |
| | | after washing 20 times | 2.6 | 0.5 |
| moisture absorption and discharge ΔW (g/g x 100) | | before washing | 1.7 | 0.1 |
| | | after washing 20 times | 1.2 | 0.2 |
| water absorption (sec) | | before washing | 10 | 17 |
| | | after washing 20 times | 24 | 32 |
| antifouling property (grade) | | before washing | 4 | 3 |
| | | after washing 20 times | 3-4 | 3 |

Table 5 (continued)

| | | Example 5 | Comparative Example 5 |
|---|---|---|---|
| frictional static voltage (V) | before washing | 250 | 1900 |
| | after washing 20 times | 770 | 3200 |
| pilling resistance (grade) | before washing | 5 | 5 |
| | after washing 20 times | 4-5 | 5 |
| seam slippage resistance (mm) | before washing | warp 1.0, weft 0.8 | warp 1.2, weft 0.8 |
| | after washing 20 times | warp 1.0, weft 0.9 | warp 1.1, weft 0.9 |

**Example 6 : dust free garment**

As the warp yarn, a polyester multifilament semi-dull (110 dtex/48 filament) soft twisted yarn (S twisting 250 twists/m) and a white conductive yarn (20 dtex/1 filament) and a doubled and twisted yarn (Z twisting 200 twists/m) of a polyester multifilament semi-dull false-twist textured yarn (84 dtex/36 filament) were warped at a ratio of 25 yarns : 1 yarn. As the weft yarn, a polyester multifilament semi-dull (110 dtex/96 filament) was used. They were woven into a 3/1 twill woven fabric with a water jet loom.

This fabric was subjected to scouring · relaxing, presetting, calendar treatment of the back by plast calendar and dyeing with a dispersion dye by conventional methods. The same graft polymerization processing agent as used in Example 1 was applied at an impregnation rate of 50 wt% by a padding method, which was followed by drying→-steaming→finish setting to give a polyester cloth superior in moisture absorption and discharge. The finishing density was warp 59 ends/cm, weft 44 picks/cm.

The obtained cloth was evaluated for properties before washing, after 20 times of washing and after 50 times of washing. The results of moisture absorption, moisture absorption and discharge, water absorption, frictional static voltage and antifouling property are shown in Table 6. The changes in the temperature within clothing during perspiration are shown in Figure 7 and changes in the humidity within clothing during perspiration are shown in Figure 8. The results of moisture absorption-heat generation-temperature rise and changes in temperature during moisture absorption-heat generation/moisture discharge-cooling showed the same pattern as the patterns obtained in Examples 1 - 3.

Using the above-mentioned cloth, a dust free garment was made, and dust was removed by dust-free washing and dust-free cleaning, which was followed by clean bag. As a result, the amount of dust was 630 particles per 1 $m^3$ before washing, 1766 particles per 1 $m^3$ after washing 20 times and 1200 particles per 1 $m^3$ after washing 50 times, which was suitable as a dust-free working clothing.

As a dust-free working clothing, the garment was comfortable to wear and gave a smooth touch without sweatiness during wearing, thus apparently showing an improved comfortableness as compared to conventional dust free garment.

**Comparative Example 6 : dust free garment**

The woven cloth used in Example 6 was subjected to scouring • relaxing, presetting, calendar treatment of the back by plast calendar and dyeing with a dispersion dye by conventional methods. An aqueous solution containing 1 wt% of an antistatic agent (NICEPOLE NF-20; NICCA CHEMICAL CO., LTD.) and 0.5 wt% of a softening agent (NICCA SILICONE N-154; NICCA CHEMICAL CO., LTD.) was padded in a wet state, which was followed by drying→-finish setting. The finishing density was warp 59 ends/cm, weft 44 picks/cm.

The obtained cloth was evaluated for properties before washing, after 20 times of washing and after 50 times of washing. The results of moisture absorption, moisture absorption and discharge, water absorption, frictional static voltage and antifouling property are shown in Table 6. The changes in the temperature within clothings during perspiration are shown in Figure 7 and changes in the humidity within clothings during perspiration are shown in Figure 8. The results of moisture absorption-heat generation-temperature rise and changes in temperature during moisture absorption-heat generation/moisture discharge-cooling showed the same pattern as the patterns obtained in Comparative Examples 1 - 3.

Using the above-mentioned cloth, a dust free garment was made, and dust was removed by dust-free washing

and dust-free cleaning, which was followed by clean bag. As a result, the amount of dust was 653 particles per 1 $m^3$ before washing, 1836 particles per 1 $m^3$ after washing 20 times and 1236 particles per 1 $m^3$ after washing 50 times, which was suitable as a dust free garment. This dust free garment gave sweatiness and stickiness during wearing, and discomfort during work operation. In addition, the frictional static voltage was high both before washing and after 50 times of washing, which was not satisfactory as a dust free garment.

Table 6

| | | | Example 6 | Comparative Example 6 |
|---|---|---|---|---|
| moisture absorption (%) | 20°C, 65% RH | before washing | 1.2 | 0.3 |
| | | after washing 20 times | 1.1 | 0.4 |
| | | after washing 50 times | 1.0 | 0.4 |
| | 30°C, 90% RH | before washing | 3.3 | 0.5 |
| | | after washing 20 times | 3.0 | 0.5 |
| | | after washing 50 times | 2.5 | 0.5 |
| moisture absorption and discharge ΔW (g/g × 100) | | before washing | 2.1 | 0.2 |
| | | after washing 50 times | 1.5 | 0.1 |
| water absorption (sec) | | before washing | 12 | 33 |
| | | after washing 50 times | 28 | 41 |
| frictional static voltage (V) | | before washing | 200 | 2600 |
| | | after washing 50 times | 1300 | 3600 |
| antifouling property (grade) | | before washing | 4 | 3 |
| | | after washing 50 times | 4 | 2-3 |
| amount of dust produced (particles/cubic meter) | | before washing | 630 | 653 |
| | | after washing 20 times | 1766 | 1836 |
| | | after washing 50 times | 1200 | 1236 |

**Example 7 : polyester lining**

A polyethylene terephthalate semi-dull resin having an intrinsic viscosity [η] of 0.63 was melt extruded and wound at a spun yarn winding-up rate of 2800 m/min to give a polyester partially oriented yarn (POY). Using a draw yarn twisting machine, a polyester multifilament drawn yarn (78 dtex/216 filament, shrinkage in hot water (SHW) = 11.0%, shrinkage by dry heating at 160°C (SHD) = 11.5%) was obtained. The drawn yarn was false-twisted with a draw false-twisting machine (ST-6 type, MITSUBISHI HEAVY INDUSTRIES., LTD.) at a processing rate of 89.2 m/min, a first heater temperature of 210°C, yarn excess supply to twisting area of +2.0% and a false-twisting number (Z→S) of 3400 twists/m, and using a sapphire pin having an eccentricity of 2 ϕ (Heberlein).

As the warp yarn, the above-mentioned polyester multifilament false-twist textured yarn (78 dtex/216 filament) was subjected to Z twisting (240 twists/m) and sizing, which was followed by beam to beam warping to give a warp beam. As the weft yarn, the above-mentioned polyester multifilament false-twist textured yarn was used without twisting, and woven into a plain woven cloth with a water jet loom.

This plain woven cloth was subjected to scouring · relaxing and presetting by conventional methods, and then to calendar treatment of the back by plast calendar and dyeing with a dispersion dye (high pressure dyeing at 130°C), which was followed by reduction clearing, dehydration and drying. The same graft polymerization processing agent as used in Example 1 was applied at an impregnation rate of 50 wt% by a padding method, which was followed by drying→steaming→finish setting to give a polyester cloth superior in moisture absorption and discharge. The finishing density was warp 144 ends/2.54 cm, weft 107 picks/2.54 cm.

The obtained cloth was evaluated for properties before washing and after 20 times of washing. The results of moisture absorption, moisture absorption and discharge, water absorption, frictional static voltage, antifouling property, tear strength and seam slippage resistance are shown in Table 7. The results of moisture absorption-heat generation-temperature rise and changes in temperature during moisture absorption-heat generation/moisture discharge-cooling showed the same pattern as the patterns obtained in Examples 1 - 3.

The above-mentioned cloth was made into a lining of a morning dress (one-piece) for women. It was comfortable to wear and was free of sweatiness or clinging to the skin during wearing. The lining showed a very smooth touch, and was comfortable to wear as compared to conventional polyester lining.

**Comparative Example 7 : polyester lining**

The woven cloth used in Example 7 was subjected to scouring • relaxing and presetting by conventional methods, and then to a calendar treatment of the back by plast calendar, and dyeing with dispersion dye (high pressure dyeing at 130°C), which was followed by reduction clearing and dehydration. An aqueous solution containing 0.5 wt% of an antistatic agent (NICEPOLE NF-20; NICCA CHEMICAL CO., LTD.) was padded in a wet state, which was followed by drying→finish setting. The finishing density was warp 144 ends/2.54 cm, weft 107 picks/2.54 cm.

The obtained cloth was evaluated for properties before washing and after 20 times of washing. The results of moisture absorption, moisture absorption and discharge, water absorption, frictional static voltage, antifouling property, tear strength and seam slippage resistance are shown in Table 7. The results of moisture absorption-heat generation-temperature rise and changes in temperature during moisture absorption-heat generation/moisture discharge-cooling showed the same pattern as the patterns obtained in Comparative Examples 1 - 3.

Using the above-mentioned cloth, a lining of a morning dress (one-piece) for women was made. It gave sweatiness and stickiness during wearing. With repeat washing at home, clinging to the skin grew to the level of discomfort. Thus, it was not preferable for the use as a lining.

Table 7

| | | | Example 7 | Comparative Example 7 |
|---|---|---|---|---|
| moisture absorption (%) | 20°C, 65% RH | before washing | 1.2 | 0.3 |
| | | after washing 20 times | 1.0 | 0.3 |
| | 30°C, 90% RH | before washing | 3.0 | 0.6 |
| | | after washing 20 times | 2.3 | 0.5 |
| moisture absorption and discharge ΔW (g/g × 100) | | before washing | 1.5 | 0.2 |
| | | after washing 20 times | 1.2 | 0.1 |
| water absorption (sec) | | before washing | 25 | 40 |
| | | after washing 20 times | 45 | 58 |
| frictional static voltage (V) | | before washing | 400 | 2000 |
| | | after washing 20 times | 600 | 3200 |
| antifouling property (grade) | | before washing | 4 | 3-4 |
| | | after washing 20 times | 3-4 | 2-3 |
| tear strength (cN) | | before washing | 930 | 950 |
| | | after washing 20 times | 870 | 880 |
| seam slippage resistance (mm) | | before washing | 1.2 | 1.0 |
| | | after washing 20 times | 0.9 | 0.9 |

**Example 8 : fabric for night clothings or bed clothings**

As the warp yarn, a soft twisted yarn (Z twisting 240 twists/m) of a polyester multifilament semi-dull false-twist textured yarn (78 dtex/216 filament) was used and as the weft yarn, a polyester multifilament semi-dull false-twist textured yarn (78 dtex/216 filament) was used to give a plain woven cloth with an air jet loom.

The obtained cloth was subjected to continuous scouring· relaxing using an open soaper, presetting, calendar treatment of the back by plast calendar, application of a color paste containing a dispersion dye, a sizing agent and a dye aid onto the cloth surface with a flat screen printing machine, and drying with a hot roller having a surface temperature of 120°C. After color development at an atmospheric temperature of 175°C, soaping and drying, the same graft polymerization processing agent as used in Example 1 was applied at an impregnation rate of 50 wt% by a padding method, which was followed by drying→steaming→finish setting to give a polyester plain woven cloth superior in moisture absorption and discharge. The finishing density was warp 63 ends/cm, weft 42 picks/cm. The cloth gave a smooth feel without sliminess or stickiness. The color development was fine, and the cloth was preferable as a fabric for bedding.

The obtained cloth was evaluated for properties before washing and after 20 times of washing. The results of moisture absorption, moisture absorption and discharge, water absorption, antifouling property and air permeability are shown in Table 8. The results of moisture absorption-heat generation-temperature rise and changes in temperature during moisture absorption-heat generation/moisture discharge-cooling showed the same pattern as the patterns obtained in Examples 1 - 3.

**Comparative Example 8 : fabric for night clothings or bed clothings**

The woven cloth used in Example 8 was subjected to continuous scouring · relaxing using an open soaper, presetting, a calendar treatment of the back by plast calendar, application of a color paste containing a dispersion dye, a sizing agent and a dye aid onto the cloth surface with a flat screen printing machine, and drying with a hot roller having a surface temperature of 120°C. After color development at an atmospheric temperature of 175°C and soaping, an aqueous solution containing 1 wt% of an antistatic agent (NICEPOLE NF-20; NICCA CHEMICAL CO., LTD.) was padded in a wet state, which was followed by drying→finish setting. The finishing density was warp 61 ends/cm, weft 43 picks/cm. While the color development was fine, sliminess and stickiness were observed. As the fabric for bedding, the cloth was the same as a conventional cloth made of 100% polyester.

The obtained cloth was evaluated for properties before washing and after 20 times of washing. The results of moisture absorption, moisture absorption and discharge, water absorption, antifouling property and air permeability are shown in Table 8. The results of moisture absorption-heat generation-temperature rise and changes in temperature during moisture absorption-heat generation/moisture discharge-cooling showed the same pattern as the patterns obtained in Comparative Examples 1 - 3.

Table 8

| | | | Example 8 | Comparative Example 8 |
|---|---|---|---|---|
| moisture absorption (%) | 20°C, 65% RH | before washing | 1.2 | 0.3 |
| | | after washing 20 times | 1.0 | 0.3 |
| | 30°C, 90% RH | before washing | 3.0 | 0.6 |
| | | after washing 20 times | 2.3 | 0.5 |
| moisture absorption and discharge ΔW (g/g × 100) | | before washing | 1.5 | 0.2 |
| | | after washing 20 times | 1.2 | 0.1 |
| water absorption (sec) | | before washing | 26 | 38 |
| | | after washing 20 times | 45 | 58 |
| antifouling property (grade) | | before washing | 4 | 3-4 |
| | | after washing 20 times | 3-4 | 2-3 |
| air permeability ($cc/cm^2/sec.$) | | before washing | 1.2 | 1.4 |
| | | after washing 20 times | 1.6 | 2.0 |

**Example 9 : inner wear**

A polyester multifilament bright trilobal cross-section yarn (84 dtex/48 filament, trademark TOYOBO ESTER) was twisted (1000 twists/m) in the S-twist direction to give a warp yarn, and a polyester multifilament semi-dull circular cross-section yarn (84 dtex/72 filament, trademark TOYOBO ESTER) was twisted (2500 twists/m) in the S-twist and Z-twist directions to give a weft yarn. A water jet loom was used to weave satin weave wherein two S-twist and Z-twist yarns were alternately woven. The density from loom was warp 90 ends/cm and weft 41 picks/cm.

The obtained cloth was subjected to a wet heating pretreatment with an open soaper, scouring · relaxing with a liquor flow dyeing machine, tentering-setting with a heat setter, continuous weight reduction by a pad-steam method, and high pressure dispersion dyeing at 130°C using a liquor flow dyeing machine. After drying, the same graft polymerization processing agent as used in Example 1 was applied at an impregnation rate of 50 wt% by a padding method. By drying→steaming→finish setting, a polyester cloth superior in moisture absorption and discharge was obtained. The finishing density was warp 103 ends/2.54 cm, weft 48 picks/2.54 cm.

The obtained cloth was evaluated for properties before washing and after 20 times of washing. The results of moisture absorption, moisture absorption and discharge, antifouling property, pilling resistance, seam slippage resistance, frictional static voltage, tear strength and water absorption are shown in Table 9. The results of moisture absorption-heat generation-temperature rise and changes in temperature during moisture absorption-heat generation/moisture discharge-cooling showed the same pattern as the patterns obtained in Examples 1 - 3.

Using the above-mentioned cloth, a slip for women was sewn. It was comfortable to wear, free of sweatiness during wearing and gave a smooth touch. As compared to conventional slip for women, an improved comfortableness during wearing was confirmed.

**Comparative Example 9 : inner wear**

Using the cloth of Example 9 but without the graft polymerization processing according to the present invention, a cloth for comparison was obtained which underwent only the prevention of static electricity and a softening step as in Comparative Example 5. The evaluation results of the obtained cloth are shown in Table 9. Using this cloth for comparison, a slip for women was sewn. As a result, the slip gave sweatiness and stickiness during wearing, as well as discomfort.

Table 9

| | | | Example 9 | Comparative Example 9 |
|---|---|---|---|---|
| moisture absorption (%) | 20°C, 65% RH | before washing | 1.5 | 0.3 |
| | | after washing 20 times | 1.1 | 0.3 |
| | 30°C, 90% RH | before washing | 3.1 | 0.5 |
| | | after washing 20 times | 2.3 | 0.5 |
| moisture absorption and discharge ΔW (g/g × 100) | | before washing | 1.6 | 0.2 |
| | | after washing 20 times | 1.3 | 0.2 |
| antifouling property (grade) | | before washing | 3-4 | 3 |
| | | after washing 20 times | 3-4 | 2-3 |
| pilling resistance (grade) | | before washing | 3-4 | 3-4 |
| | | after washing 20 times | 3-4 | 3 |
| seam slippage resistance (mm) | | before washing | 1.2 | 1.1 |
| | | after washing 20 times | 1.5 | 1.6 |
| frictional static voltage (V) | | before washing | 400 | 2600 |
| | | after washing 20 times | 900 | 3600 |
| tear strength (N) | | before washing | 11.2 | 11.5 |
| | | after washing 20 times | 10.5 | 10.3 |
| water absorption (sec) | | before washing | 0.8 | 1.0 |
| | | after washing 20 times | 14 | 80 |

**Example 10 : blouse**

A polyester multifilament different shrinkage mixtured filament yarn (66 dtex/36 filament, highly shrinkable component; 33 dtex/18 filament, low shrinkable component; 33 dtex/18 filament) was twisted (450 twists/m) in the S-twist direction, and PVA and an acrylic sizing were mixed and applied in an appropriate amount to the twisted yarn to give a warp yarn. As the weft yarn, a polyester multifilament bright circular cross-section yarn (84 dtex/72 filament) was twisted (3000 twists/m each) in the S-twist and Z-twist directions. Two S-twist and Z-twist yarns were alternately woven using a water jet loom to give a plain weave. The density from loom was warp 64 ends/cm, weft 38 picks/cm.

The obtained cloth was subjected to scouring · relaxing with a high pressure rotary washer, tentering-setting with a heat setter, continuous weight reduction by a pad-steam method, and high pressure dispersion dyeing at 130°C using a liquor flow dyeing machine. After drying, the same graft polymerization processing and finishing as in Example

5 was applied to give a polyester cloth superior in moisture absorption and discharge. The finishing density was warp 73 ends/cm, weft 48 picks/cm.

The obtained cloth was evaluated for properties before washing and after 20 times of washing. The results of moisture absorption, moisture absorption and discharge, antifouling property, pilling resistance, seam slippage resistance, frictional static voltage, tear strength and water absorption are shown in Table 10. The results of moisture absorption-heat generation-temperature rise and changes in temperature during moisture absorption-heat generation/moisture discharge-cooling showed the same pattern as the patterns obtained in Examples 1 - 3.

Using the above-mentioned cloth, a blouse for women was sewn. It was comfortable to wear, was free of sweatiness during wearing and gave a smooth touch. As compared to conventional blouse for women, an improved comfortableness during wearing was confirmed.

**Comparative Example 10 : blouse**

Using the cloth of Example 10 but without the graft polymerization processing according to the present invention, a cloth for comparison was obtained which underwent only the prevention of static electricity and a softening step as in Comparative Example 5. The evaluation results of the obtained cloth are shown in Table 10. Using this cloth for comparison, a blouse for women was sewn. As a result, the blouse gave sweatiness and stickiness during wearing, as well as discomfort.

Table 10

| | | | Example 10 | Comparative Example 10 |
|---|---|---|---|---|
| moisture absorption (%) | 20°C, 65% RH | before washing | 1.2 | 0.3 |
| | | after washing 20 times | 1.0 | 0.4 |
| | 30°C, 90% RH | before washing | 2.8 | 0.5 |
| | | after washing 20 times | 2.2 | 0.5 |
| moisture absorption and discharge ΔW (g/g × 100) | | before washing | 1.6 | 0.2 |
| | | after washing 20 times | 1.2 | 0.1 |
| antifouling property (grade) | | before washing | 4 | 3 |
| | | after washing 20 times | 3-4 | 2-3 |
| pilling resistance (grade) | | before washing | 4 | 4 |
| | | after washing 20 times | 4 | 4 |
| seam slippage resistance(mm) | | before washing | 1.0 | 1.1 |
| | | after washing 20 times | 0.9 | 0.8 |
| frictional static voltage (V) | | before washing | 300 | 2400 |
| | | after washing 20 times | 800 | 5000 |
| tear strength (cN) | | before washing | 680 | 670 |
| | | after washing 20 times | 650 | 650 |
| water absorption (sec) | | before washing | Instantaneous | Instantaneous |
| | | after washing 20 times | Instantaneous | Instantaneous |

**Example 11 : Middle East racial clothings (for men)**

A polyester multifilament different shrinkage mixtured filament yarn (90 dtex/29 filament, highly shrinkable component; 33 dtex/5 filament, low shrinkable component; 57 dtex/24 filament) was twisted (400 twists/m) in the S-twist direction, and PVA and an acrylic sizing were mixed and applied in an appropriate amount to the twisted yarn to give a warp yarn. As the weft yarn, a polyester multifilament bright circular cross-section yarn (167 dtex/96 filament) was twisted (1800 twists/m each) in the S-twist and Z-twist directions. Two S-twist and Z-twist yarns were alternately woven using a water jet loom to give a plain weave. The density from loom was warp 62 ends/cm, weft 32 picks/cm.

The obtained cloth was subjected to scouring · relaxing with a high pressure rotary washer, tentering-setting with a heat setter, liquor stream reduction by a liquor flow dyeing machine, and high pressure dispersion dyeing at 130°C using a liquor flow dyeing machine to give a white cloth. After drying, the same graft polymerization processing and finishing as in Example 5 was applied to give a polyester cloth superior in moisture absorption and discharge. The finishing density was warp 71 ends/cm, weft 41 picks/cm.

The obtained cloth was evaluated for properties before washing and after 20 times of washing. The results of moisture absorption, moisture absorption and discharge, pilling resistance, seam slippage resistance, frictional static voltage, color fastness to light, tear strength and water absorption are shown in Table 11. The results of moisture absorption-heat generation-temperature rise and changes in temperature during moisture absorption-heat generation/moisture discharge-cooling showed the same pattern as the patterns obtained in Examples 1 - 3.

Using the above-mentioned cloth, a thobe, which is a racial clothing for men of Moslem countries, was sewn. It was comfortable to wear, was free of sweatiness during wearing and gave a smooth touch. As compared to conventional thobe, an improved comfortableness during wearing was confirmed.

**Comparative Example 11 : Middle East racial clothings (for men)**

Using the cloth of Example 11 but without the graft polymerization processing according to the present invention, a cloth for comparison was obtained which underwent only the prevention of static electricity and a softening step as in Comparative Example 5. The evaluation results of the obtained cloth are shown in Table 11. Using this cloth for comparison, a thobe was sewn. As a result, the thobe gave sweatiness and stickiness during wearing, as well as discomfort.

Table 11

| | | | Example 11 | Comparative Example 11 |
|---|---|---|---|---|
| moisture absorption (%) | 20°C, 65% RH | before washinq | 1.3 | 0.4 |
| | | after washing 20 times | 1.0 | 0.3 |
| | 30°C, 90% RH | before washinq | 3.0 | 0.5 |
| | | after washing 20 times | 2.3 | 0.4 |
| moisture absorption and discharge ΔW (g/g × 100) | | before washinq | 1.7 | 0.1 |
| | | after washing 20 times | 1.3 | 0.1 |
| pilling resistance(grade) | | before washinq | 4-5 | 4 |
| | | after washing 20 times | 4 | 4 |
| seam slippage resistance (mm) | | before washinq | 1.2 | 1.2 |
| | | after washing 20 times | 1.3 | 1.4 |
| frictional static voltage (V) | | before washinq | 200 | 4400 |
| | | after washing 20 times | 800 | 5200 |
| color fastness to light (grade) | | before washinq | 4-5 | 4 |
| | | after washing 20 times | 4 | 4 |
| tear strength (cN) | | before washing | 1000 | 950 |
| | | after washing 20 times | 700 | 720 |
| water absorption (sec) | | before washing | 0.4 | 0.5 |
| | | after washing 20 times | 1.7 | 28 |

**Example 12 : Middle East racial clothings (for women)**

A polyester multifilament different shrinkage mixtured filament yarn (66 dtex/36 filament, highly shrinkable component; 33 dtex/18 filament, low shrinkable component; 33 dtex/18 filament) was twisted (2500 twists/m) in the S-twist direction and Z-twist direction. Two S-twist and Z-twist yarns were alternately woven using a water jet loom to give a plain weave. The density from loom was warp 29 ends/cm, weft 30 picks/cm.

The obtained cloth was subjected to scouring · relaxing with a high pressure rotary washer, tentering-setting with a heat setter, continuous weight reduction by a pad-steam method, and high pressure dispersion dyeing at 135°C using a liquor flow dyeing machine to give a black cloth. After drying, the same graft polymerization processing and finishing as in Example 5 was applied to give a polyester cloth superior in moisture absorption and discharge. The finishing density was warp 35 ends/cm, weft 35 picks/cm.

The obtained cloth was evaluated for properties before washing and after 20 times of washing. The results of moisture absorption, moisture absorption and discharge, tear strength, frictional static voltage and L value are shown in Table 12. The results of moisture absorption-heat generation-temperature rise and changes in temperature during moisture absorption-heat generation/moisture discharge-cooling showed the same pattern as the patterns obtained in Examples 1 - 3.

Using the above-mentioned cloth, a chador, which is a racial clothing for women of Moslem countries, was sewn. It was comfortable to wear, was free of sweatiness during wearing and gave a smooth touch. As compared to conventional chador, an improved comfortableness during wearing was confirmed.

**Comparative Example 12 : Middle East racial clothings (for women)**

Using the cloth of Example 12 but without the graft polymerization processing according to the present invention, a cloth for comparison was obtained which underwent only the prevention of static electricity and a softening step as in Comparative Example 5. The evaluation results of the obtained cloth are shown in Table 12. Using this cloth for comparison, a chador was sewn. As a result, the chador gave sweatiness and stickiness during wearing, as well as discomfort.

Table 12

| | | | Example 12 | Comparative Example 12 |
|---|---|---|---|---|
| moisture absorption (%) | 20°C, 65% RH | before washing | 1.2 | 0.3 |
| | | after washing 20 times | 1.0 | 0.3 |
| | 30°C, 90% RH | before washing | 2.8 | 0.4 |
| | | after washing 20 times | 2.1 | 0.4 |
| moisture absorption and discharge ΔW (g/g × 100) | | before washing | 1.6 | 0.1 |
| | | after washing 20 times | 1.1 | 0.1 |
| tear strength (N) | | before washing | 6.7 | 6.5 |
| | | after washing 20 times | 6.8 | 6.7 |
| frictional static voltage (V) | | before washing | 400 | 3400 |
| | | after washing 20 times | 500 | 5500 |
| L value | | before washing | 9.1 | 10.5 |
| | | after washing 20 times | 9.4 | 10.9 |

**Example 13**

(1) production of moisture highly absorptive and dischargeable organic fine particles II

A water-soluble polymer of methacrylic acid/sodium p-styrenesulfonate = 70/30 (350 parts by weight) and sodium sulfate (35 parts by weight) were dissolved in 6500 parts by weight of water, and the obtained solution was charged in a polymerization tank with a paddle stirrer. 2,2'-Azobis-(2,4-dimethylvaleronitrile) (15 parts by weight) was dissolved in methyl acrylate (2750 parts by weight) and divinylbenzene (330 parts by weight), and the obtained solution was charged in a polymerization tank. The solution was polymerized at 60°C for 2 h while stirring at 450 rpm to give a methyl acrylate/divinylbenzene copolymer having an average particle size of 62 μm and a polymerization degree of 89%. This polymer (100 parts by weight) was dispersed in water (900 parts by weight), and 100 parts by weight of sodium hydroxide was added. The mixture was reacted at 90°C for 2.5 h and the methyl ester moiety of methyl acrylate was hydrolyzed to give a crosslinked polymer containing the carboxyl group in Na salt form (4.7 mmol/g). The obtained polymer was dispersed in water, washed, dehydrated, dried and pulverized.

The obtained moisture highly absorptive and dischargeable organic fine particles II showed a moisture percentage at 65% RH (20°C) of 41 wt% and an average particle size of 2 μm. The moisture percentage of the organic fine particles II after drying at 120°C for 12 h at atmospheric pressure and standing in a desiccator at 65% RH (20°C) for 10 min was 10 wt%, which was 41 wt% after 24 h. The moisture percentage of the particles after standing in a desiccator at 90% RH (20°C) for 24 h was 59 wt%, after which the particles were stood in a desiccator at 40% RH (20°C) for 1 h and the moisture percentage then was measured to be 26 wt%, the results confirming the moisture absorptive and discharging property.

(2) graft polymerization processing agent

| | |
|---|---|
| moisture highly absorptive and dischargeable organic fine particles II obtained in (1) | 20 parts by weight |
| monomer A : compound of the above-mentioned formula (3) | 10 parts by weight |
| monomer C : compound of the above-mentioned formula (12) | 3 parts by weight |
| radical polymerization catalyst: ammonium persulfate | 1 part by weight |
| water | 66 parts by weight |

(3) production of moisture absorptive and dischargeable cloth

In the same manner as in Example 2 except that the graft polymerization processing agent of the above-mentioned (2) was used, a processed knitted fabric was obtained. The obtained processed knitted fabric was evaluated for properties before washing and after 20 times of washing. The results are shown in Table 13.

Table 13

| | | | Example 13 |
|---|---|---|---|
| moisture absorption (%) | 20°C, 65% RH | before washing | 1.79 |
| | | after washing 20 times | 1.57 |
| | 30°C, 90% RH | before washing | 4.88 |
| | | after washing 20 times | 3.31 |
| moisture absorption and discharge ΔW (g/g × 100) 20°C, 65% RH↔30°C, 90% RH | | before washing | 3.09 |
| | | after washing 20 times | 1.74 |
| water absorption (sec) | | before washing | instantaneous |
| | | after washing 20 times | instantaneous |
| antifouling property (grade) | | before washing | 3-4 |
| | | after washing 20 times | 3-4 |

As is evident from Tables 13 and 2, the cloth obtained in Example 13, wherein moisture highly absorptive and dischargeable organic fine particles II were graft-processed, showed a difference in moisture absorption at 30°C × 90% RH of not less than 2.0% before washing and not less than 1.5% after washing 20 times, relative to the unprocessed product of Comparative Example 2, and showed superior moisture absorption-heat generation-temperature rise and moisture absorption-heat generation/moisture discharge-cooling property. Consequently, the cloth showed decreased sweatiness and stickiness, and a smooth touch. In addition, the cloth of Example 13 did not impair aesthetic aspects or functions, such as softness, color, gloss and the like, of a hydrophobic synthetic fiber.

As described in the foregoing, the present invention provides a moisture absorptive and dischargeable cloth comprising a hydrophobic synthetic fiber in a proportion of not less than 60 wt%, and moisture highly absorptive and dischargeable organic fine particles comprising an acrylic polymer having a crosslinking structure and a carboxyl group in a salt form, wherein said organic fine particles are bonded to the surface of the fiber by graft polymerization. The resulting cloth shows extremely high moisture absorption, superior moisture absorption-heat generation-temperature rise property and moisture absorption-heat generation/moisture discharge-cooling property, as compared to an unprocessed product. When it is used as a cloth for clothings, it quickly absorbs moisture and heat in the clothings and discharges then into the air, thereby controlling the weather within clothing. As a result, sweatiness and stickiness are reduced and a smooth touch can be obtained. In addition, since it is superior in the resistance to washing and resistance to friction, the cloth shows the moisture absorption and discharge properties for a long time.

## Claims

1. A moisture absorptive and dischargeable cloth comprising a hydrophobic synthetic fiber in a proportion of not less than 60 wt%, and moisture highly absorptive and dischargeable organic fine particles comprising an acrylic polymer having a crosslinking structure and a carboxyl group in a salt form, wherein said organic fine particles are bonded to the surface of the fiber by graft polymerization.

2. The moisture absorptive and dischargeable cloth of claim 1, wherein said moisture highly absorptive and dischargeable organic fine particles are bonded to the surface of the fiber by graft polymerization of a monomer comprising a polyoxyalkylene group and two or more double bonds capable of radical polymerization.

3. The moisture absorptive and dischargeable cloth of claim 2, wherein said moisture highly absorptive and dischargeable organic fine particles are bonded to the surface of the fiber by graft polymerization of a monomer of the following formula (1), which comprises a polyoxyalkylene group and two or more double bonds capable of radical polymerization, with at least one monomer selected from a monomer comprising a double bond capable of radical polymerization and at least one of hydroxyl group, carboxyl group, amino group, sulfonic acid group and phosphoric acid group, and a monomer comprising an aziridine group:

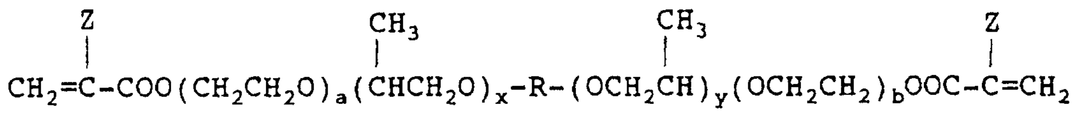 (1)

wherein R is a group of the formula

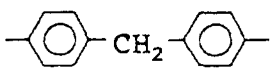 , 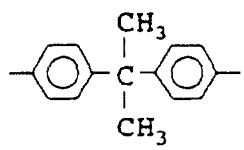 , 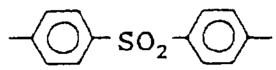 or $-C_nH_{2n}-$

directly bonded, wherein n is an integer of 1 to 6, Z is H or $CH_3$, a and b are each 0 or a positive integer and make a+b 0 to 50, and x and y are each 0 or a positive integer and make x+y 0 to 30, provided that a+b+x+y is not less than 10.

4. The moisture absorptive and dischargeable cloth of claim 3, wherein said moisture highly absorptive and dischargeable organic fine particles are bonded to the surface of the fiber by graft polymerization of a monomer of the formula (1), a monomer comprising a double bond capable of radical polymerization and at least one of hydroxyl group, carboxyl group, amino group, sulfonic acid group and phosphoric acid group, and a monomer comprising an aziridine group.

5. The moisture absorptive and dischargeable cloth of one or more of claims 1 to 4,
wherein said moisture highly absorptive and dischargeable organic fine particles are obtained by introducing a crosslinking structure into an acrylonitrile polymer or a (meth)acrylate polymer comprising acrylonitrile or (meth) acrylate in a proportion of not less than 50 wt% by a hydrazine, divinylbenzene or triallyl isocyanurate treatment and chemically converting the residual nitrile group or ester group into a carboxyl group in a salt form by hydrolysis, said fine particles comprising the carboxyl group in a salt form in a proportion of not less than 1.0 mmol/g.

6. The moisture absorptive and dischargeable cloth of one or more of claims 1 to 5,
which shows moisture absorption at 30°C, 90% RH, which is higher by not less than 2% before washing and not less than 1.5% after 20 times of washing than that of an unprocessed cloth comprising the hydrophobic synthetic fiber in a proportion of not less than 60 wt%.

7. The moisture absorptive and dischargeable cloth of one or more of claims 1 to 6,
which shows moisture absorption and discharge (ΔW) of not less than 1.0, which is a difference between moisture absorption under a 20°C, 65% RH environment and that under a 30°C, 90% RH environment.

**8.** The moisture absorptive and dischargeable cloth of one or more of claims 1 to 7, which shows water repellency according to JIS L1092 of not less than grade 5 before washing, and not less than grade 4 after 20 times of washing.

**9.** The moisture absorptive and dischargeable cloth of one or more of claims 1 to 8, which shows a frictional static voltage according to JIS L1094 under a 20°C, 40% RH environment of not more than 1000 V before washing, and not more than 2000 V after 50 times of washing.

**10.** The moisture absorptive and dischargeable cloth of one or more of claims 1 to 8, which shows a frictional static voltage according to JIS L1094 under a 20°C, 40% RH environment of not more than 500 V before washing, and not more than 2000 V after 20 times of washing.

**11.** The moisture absorptive and dischargeable cloth of one or more of claims 1 to 10, which shows air permeability according to JIS L1096 A of not more than 2.0 $cc/cm^2/sec$.

**12.** A method for producing a moisture absorptive and dischargeable cloth, which comprises applying a processing agent comprising moisture highly absorptive and dischargeable organic fine particles comprising an acrylic polymer having a carboxyl group in a salt form and a crosslinking structure, and a monomer comprising a polyoxyalkylene group and two or more double bonds capable of radical polymerization, to a cloth comprising a hydrophobic synthetic fiber in a proportion of not less than 60 wt% to allow polymerization on the cloth.

**13.** The method of claim 12, wherein the processing agent comprises the moisture highly absorptive and dischargeable organic fine particles in a proportion of 5 - 30 parts by weight, a monomer of the formula (1) in a proportion of 1 - 25 parts by weight, a monomer comprising a double bond capable of radical polymerization and at least one of hydroxyl group, carboxyl group, amino group, sulfonic acid group and phosphoric acid group in a proportion of 0 - 5 parts by weight, and a monomer comprising an aziridine group in a proportion of 0.1 - 5 parts by weight:

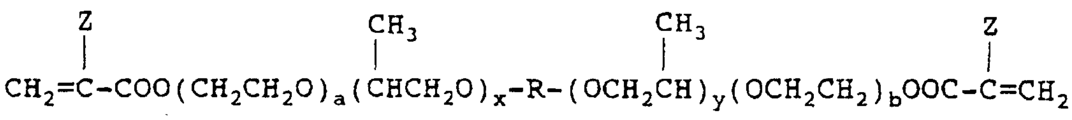 (1)

wherein R is a group of the formula

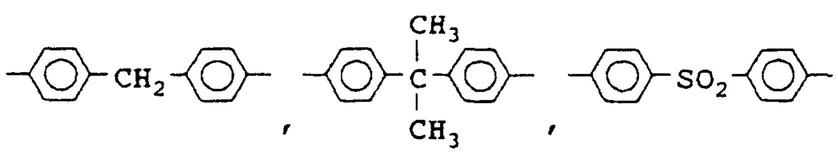 , , or $-C_nH_{2n}-$

directly bonded, wherein n is an integer of 1 to 6, Z is H or $CH_3$, a and b are each 0 or a positive integer and make a+b 0 to 50, and x and y are each 0 or a positive integer and make x+y 0 to 30, provided a+b+x+y is not less than 10.

**14.** The method of claim 13, wherein the monomer comprising a double bond capable of radical polymerization and at least one of hydroxyl group, carboxyl group, amino group, sulfonic acid group and phosphoric acid group is comprised in a proportion of 0.1 - 5 parts by weight.

**15.** An article of clothing comprising the moisture absorptive and dischargeable cloth of any one of claims 1 to 11.

**16.** Outerwear comprising the moisture absorptive and dischargeable cloth of any one of claims 1 to 11.

**17.** A formalwear comprising the moisture absorptive and dischargeable cloth of any one of claims 1 to 11.

**18.** An inner wear comprising the moisture absorptive and dischargeable cloth of any one of claims 1 to 11.

**19.** A dust free garment comprising the moisture absorptive and dischargeable cloth of any one of claims 1 to 11.

**20.** A lining comprising the moisture absorptive and dischargeable cloth of any one of claims 1 to 11.

**21.** A fabric for night clothing or bed clothing, which comprises the moisture absorptive and dischargeable cloth of any one of claims 1 to 11.

FIG. 1

moisture absorption - heat generation -
temperature rise 20°C × 40%RH →→ 20°C × 90%RH

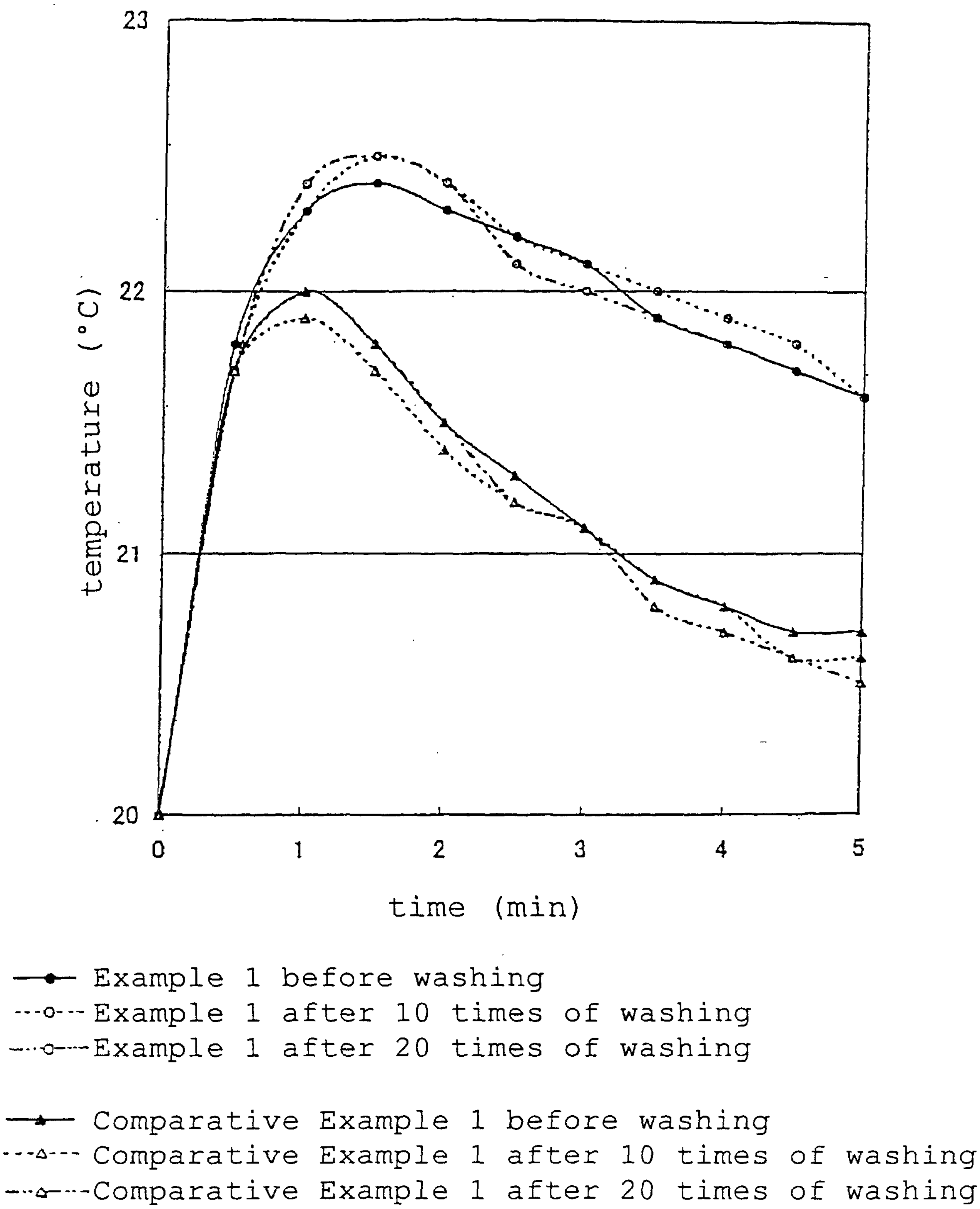

FIG. 2

20°C,40%RH → (0 min) → 20°C,90%RH → (10 min) → 20°C,40%RH

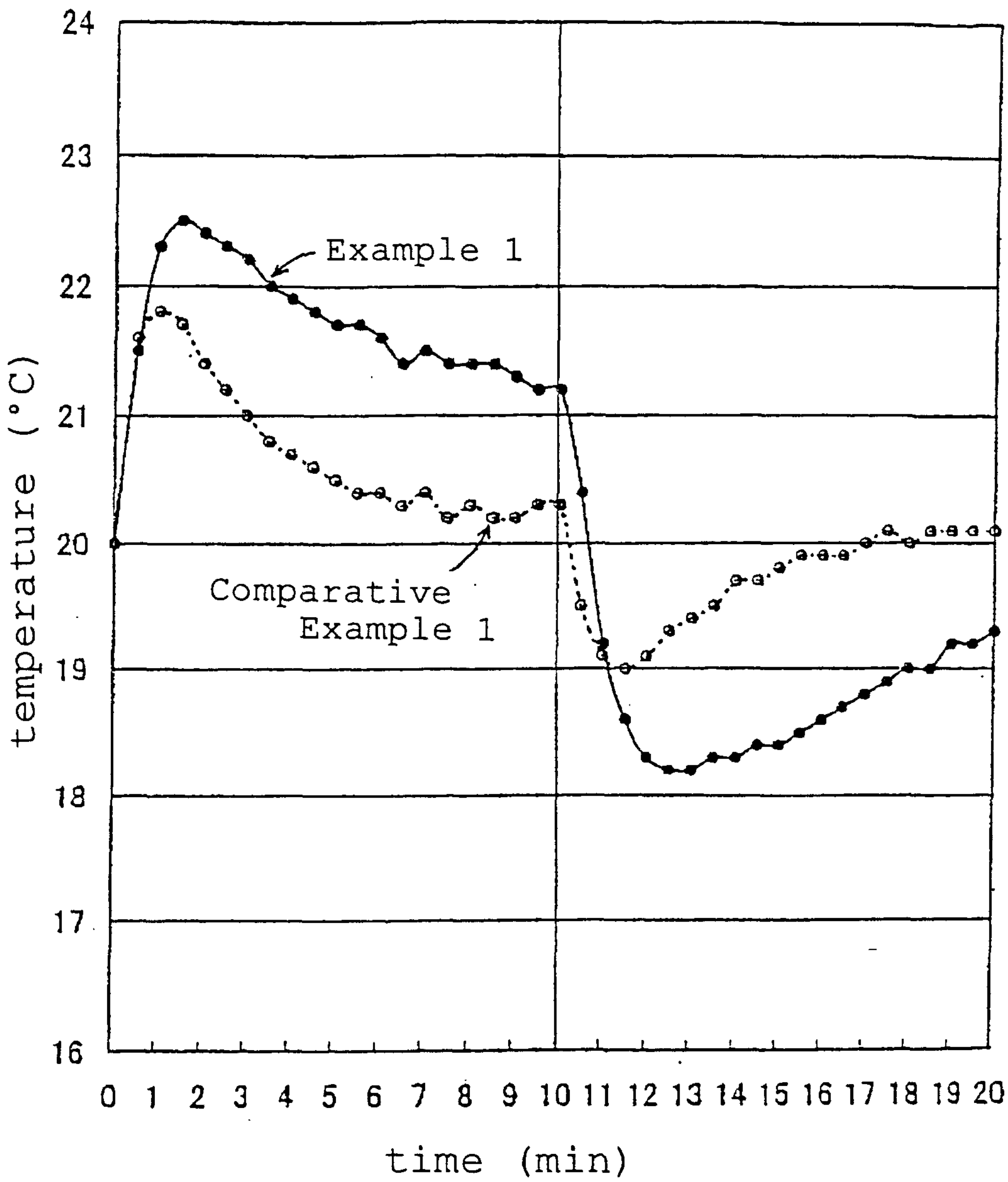

# FIG. 3

moisture absorption - heat generation -
temperature rise 20°C × 40%RH →→ 20°C × 90%RH

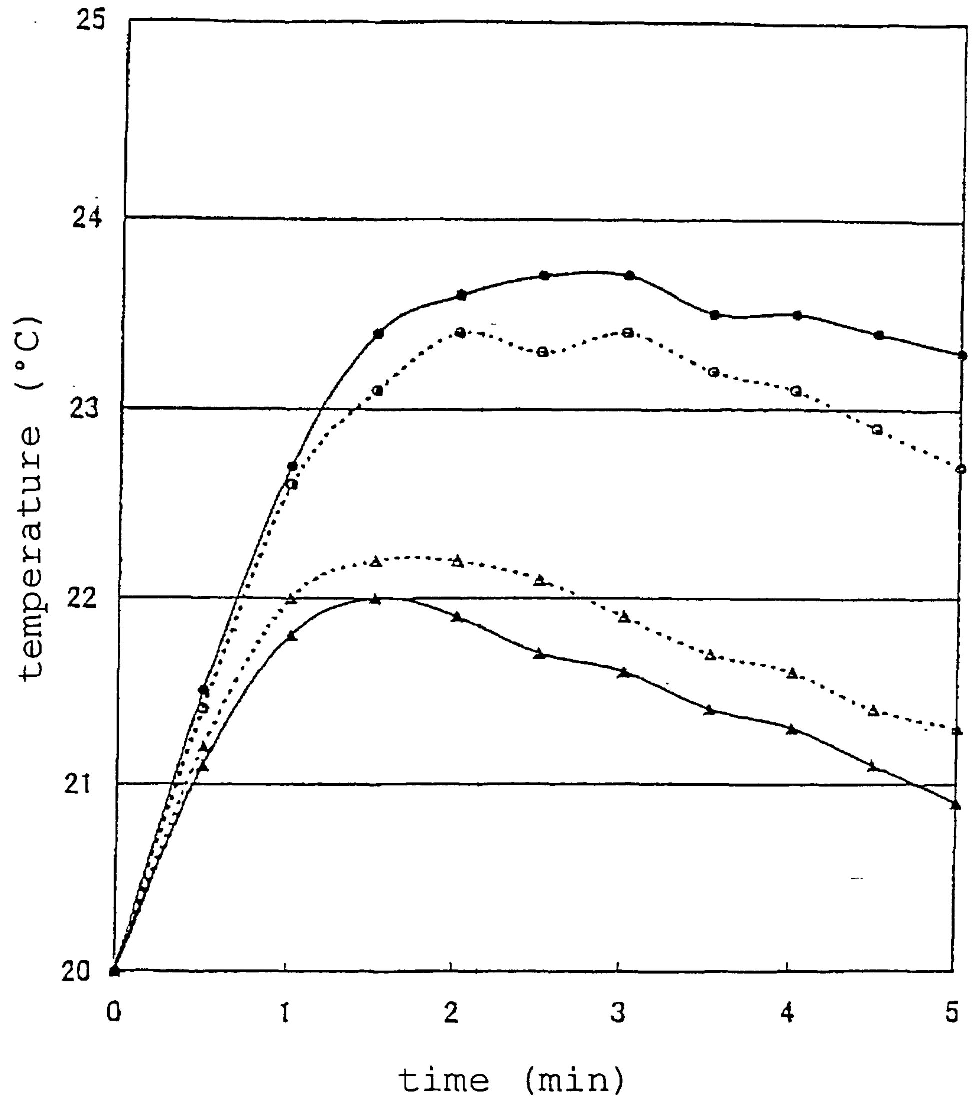


Example 2 before washing
Example 2 after 20 times of washing

Comparative Example 2 before washing
Comparative Example 2 after 20 times of washing

FIG. 4

20°C,40%RH → (0 min) → 20°C,90%RH → (10 min) → 20°C,40%RH

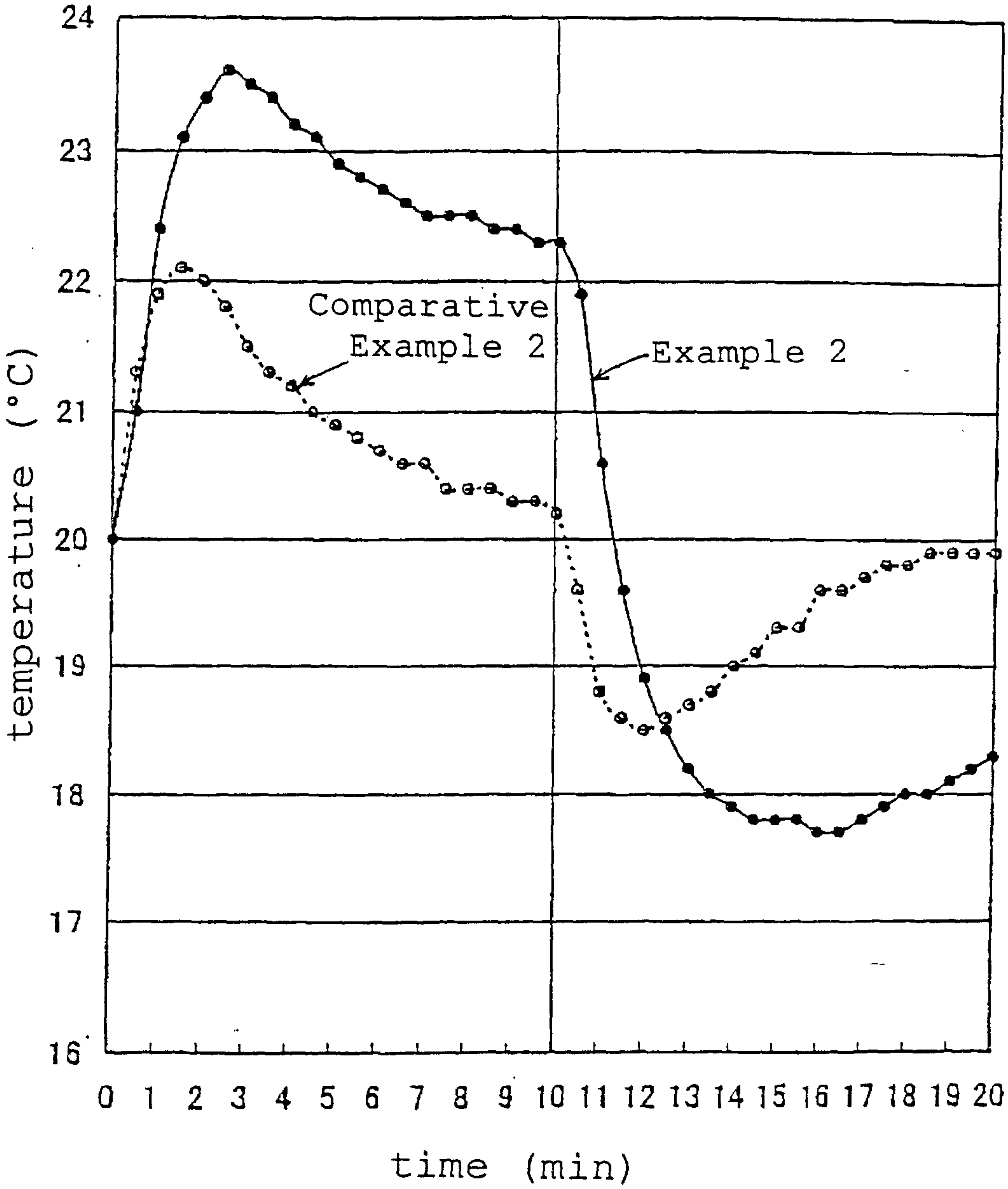

FIG. 5

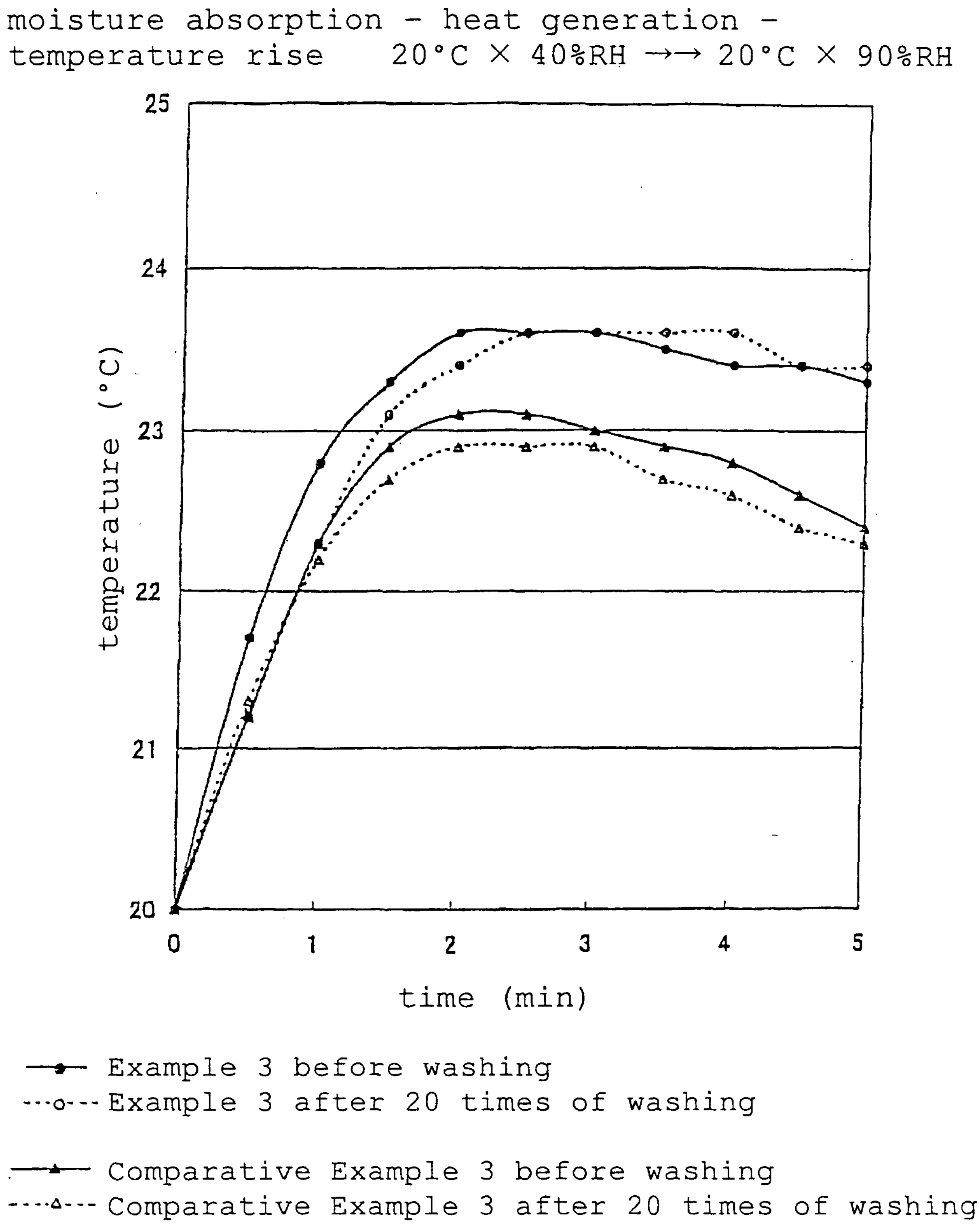
moisture absorption - heat generation -
temperature rise 20°C × 40%RH →→ 20°C × 90%RH
25
24
23
22
21
20
temperature (°C)
0
1
2
3
4
5
time (min)
Example 3 before washing
Example 3 after 20 times of washing
Comparative Example 3 before washing
Comparative Example 3 after 20 times of washing

# FIG. 6

20°C,40%RH → (0 min) → 20°C,90%RH → (10 min) → 20°C,40%RH

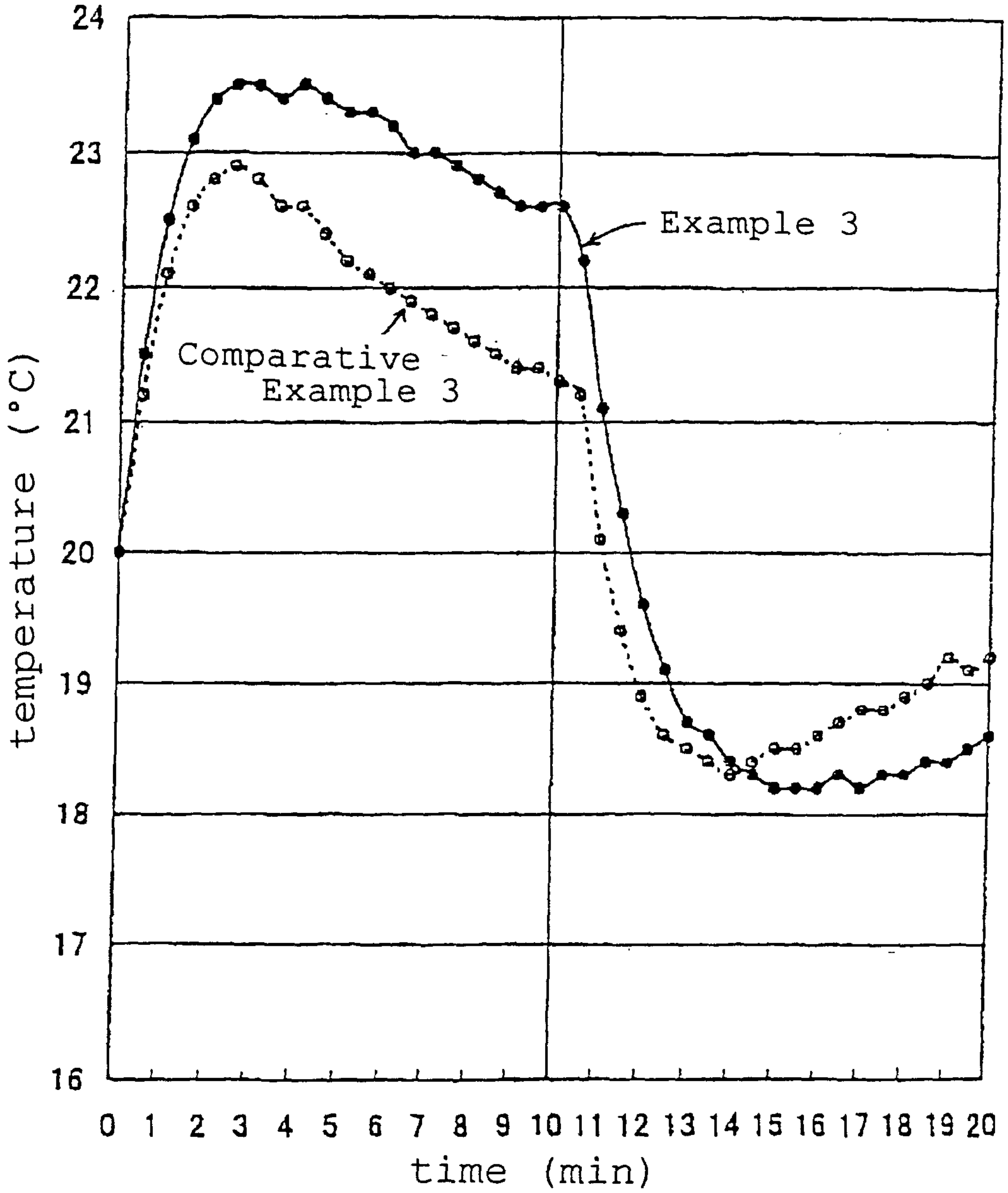

FIG. 7

changes of temperature within clothing during sweating

stable (10 min) → perspiration (3 min)
→ cessation of perspiration (5 min)
→ perspiration (3 min)
→ cessation of perspiration (10 min)

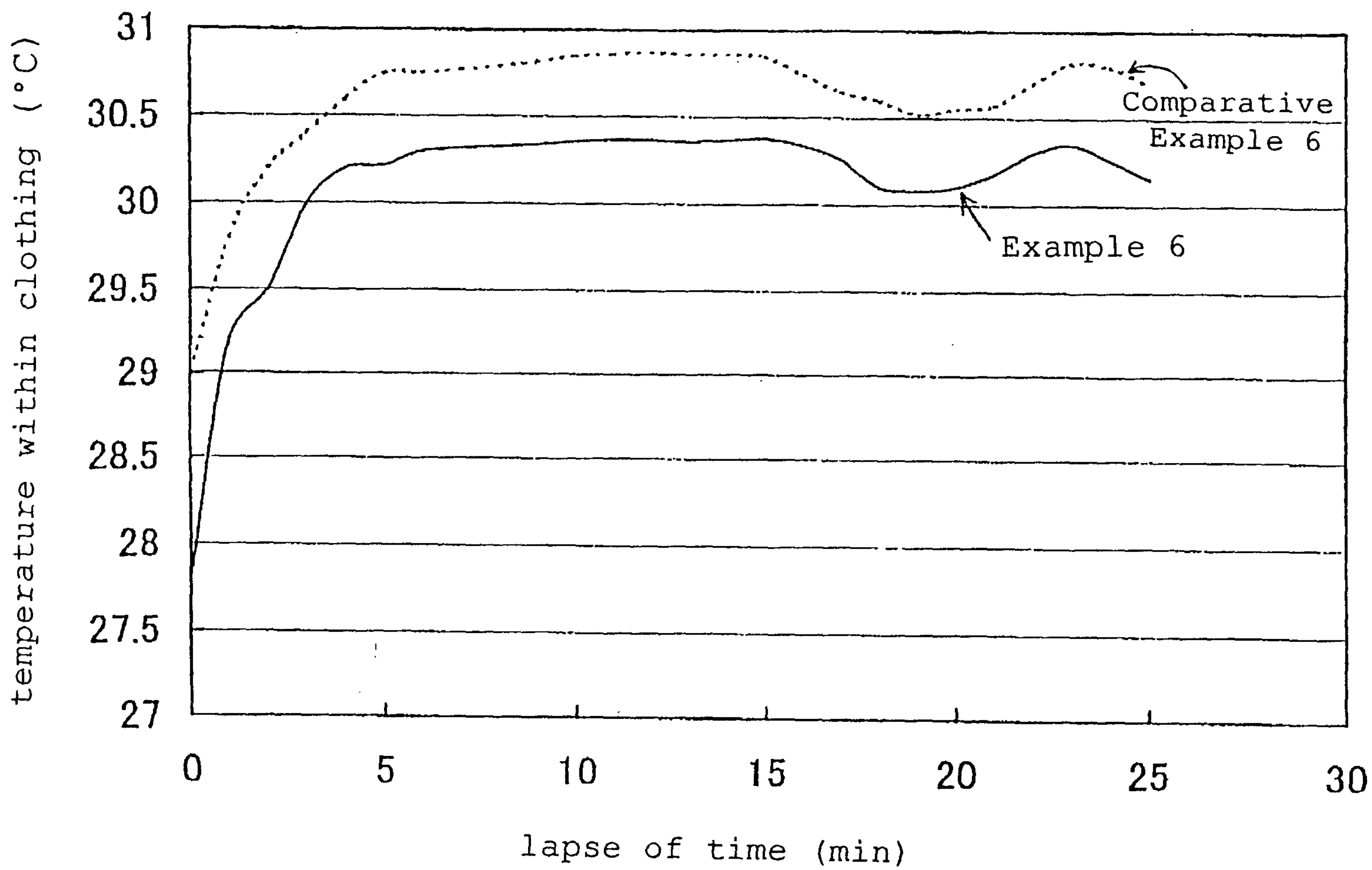

# FIG. 8

changes of humidity within clothing during sweating

stable (10 min) → perspiration (3 min)
→ cessation of perspiration (5 min)
→ perspiration (3 min)
→ cessation of perspiration (10 min)

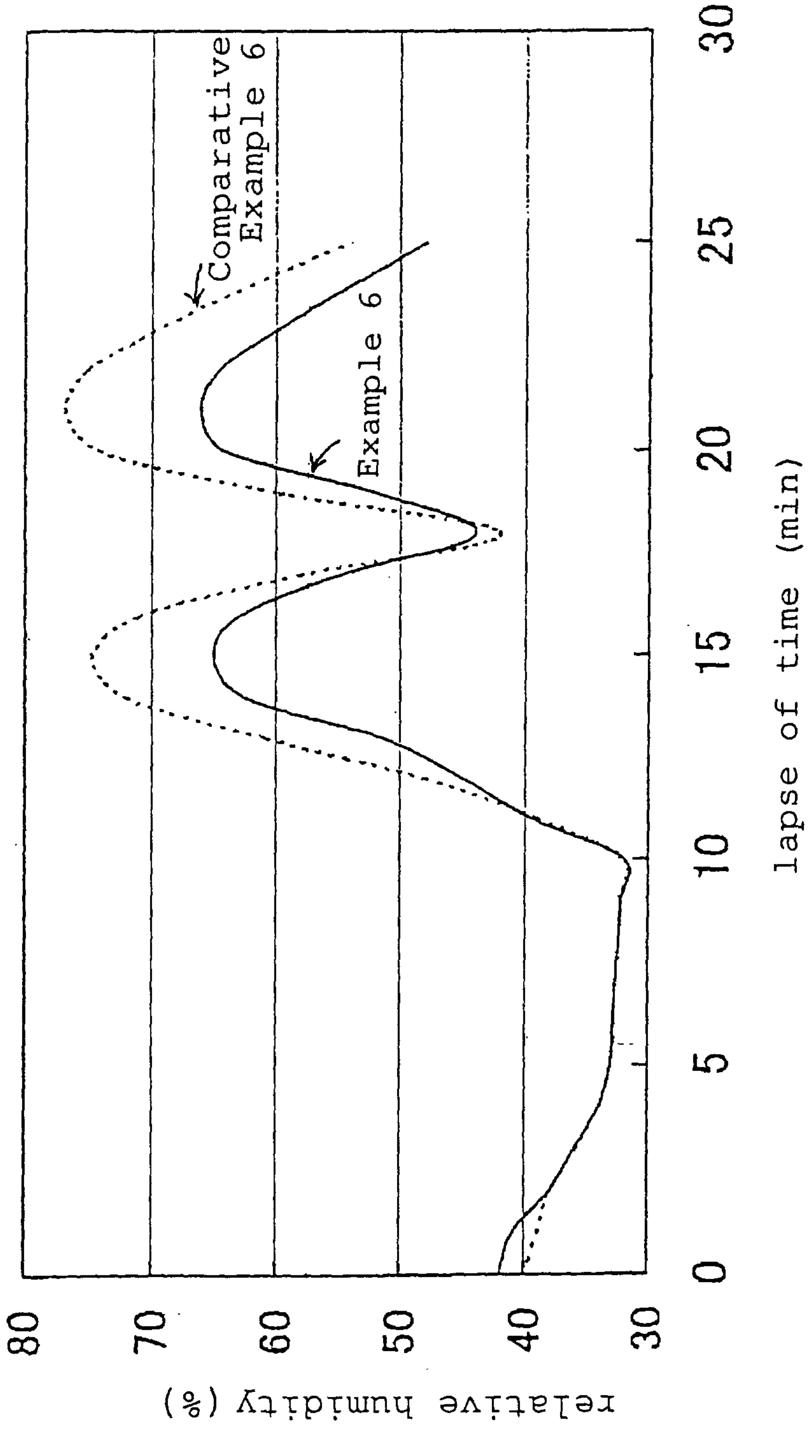

European Patent Office

# EUROPEAN SEARCH REPORT

Application Number
EP 01 11 1854

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DATABASE WPI<br>Section Ch, Week 198729<br>Derwent Publications Ltd., London, GB;<br>Class A14, AN 1987-203812<br>XP002173271<br>& JP 62 133183 A (MITSUBISHI PETROCHEMICAL CO LTD), 16 June 1987 (1987-06-16)<br>* abstract *<br>--- | 1,2, 6-12, 15-21 | D06M23/08<br>D06M14/08 |
| A | EP 0 939 160 A (IDEMITSU PETROCHEMICAL CO)<br>1 September 1999 (1999-09-01)<br>* paragraph ‘0051! - paragraph ‘0061! *<br>--- | 1-21 | |
| A | GB 2 339 198 A (JAPAN EXLAN CO LTD)<br>19 January 2000 (2000-01-19)<br>* page 18, line 6 - line 18 *<br>* page 25, line 10 - page 26, line 10 *<br>--- | 1-21 | |
| A | DATABASE WPI<br>Section Ch, Week 199543<br>Derwent Publications Ltd., London, GB;<br>Class A14, AN 1995-332898<br>XP002173272<br>& JP 07 229062 A (MITSUBISHI PAPER MILLS LTD), 29 August 1995 (1995-08-29)<br>* abstract *<br>--- | 1-21 | TECHNICAL FIELDS SEARCHED (Int.Cl.7)<br>D06M |
| A | DATABASE WPI<br>Section Ch, Week 198504<br>Derwent Publications Ltd., London, GB;<br>Class A87, AN 1985-021915<br>XP002173273<br>& JP 59 216977 A (KURARAY CO LTD),<br>7 December 1984 (1984-12-07)<br>* abstract *<br>----- | 1-4 | |

The present search report has been drawn up for all claims

| Place of search | Date of completion of the search | Examiner |
|---|---|---|
| THE HAGUE | 26 July 2001 | Fiocco, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 01 11 1854

This annex lists the patent family membersrelating to the patent documents cited in the above-mentioned European search report.
The members are as contained in the European Patent Office EDP file on
The European Patent Office is in no way liable for these particulars which are merely given for the purpose of information.

26-07-2001

| Patent document cited in search report | Publication date | Patent family member(s) | Publication date |
|---|---|---|---|
| JP 62133183 A | 16-06-1987 | NONE | |
| EP 0939160 A | 01-09-1999 | CA 2251961 A | 30-10-1997 |
| | | WO 9740227 A | 30-10-1997 |
| GB 2339198 A | 19-01-2000 | JP 2000017101 A | 18-01-2000 |
| | | DE 19928844 A | 05-01-2000 |
| | | US 6080797 A | 27-06-2000 |
| JP 7229062 A | 29-08-1995 | NONE | |
| JP 59216977 A | 07-12-1984 | JP 1732588 C | 17-02-1993 |
| | | JP 4023027 B | 21-04-1992 |

EPO FORM P0459

For more details about this annex : see Official Journal of the European Patent Office, No. 12/82